(19)

(11) EP 3 234 704 B1

(12) **EUROPÄISCHE PATENTSCHRIFT**

(45) Veröffentlichungstag und Bekanntmachung des Hinweises auf die Patenterteilung:
**19.06.2024 Patentblatt 2024/25**

(21) Anmeldenummer: **15801395.3**

(22) Anmeldetag: **25.11.2015**

(51) Internationale Patentklassifikation (IPC):
***B29C 44/34*** *(2006.01)* ***B29C 44/44*** *(2006.01)*
***B29C 44/60*** *(2006.01)*

(52) Gemeinsame Patentklassifikation (CPC):
**B29C 44/60; B29C 44/3426; B29C 44/445**

(86) Internationale Anmeldenummer:
**PCT/EP2015/077668**

(87) Internationale Veröffentlichungsnummer:
**WO 2016/083464 (02.06.2016 Gazette 2016/22)**

(54) **VERFAHREN ZUM STEUERN EINES SCHRITTES EINES MIT EINER MASCHINE AUTOMATISCH AUSGEFÜHRTEN PROZESSES UND EIN VERFAHREN ZUM HERSTELLEN EINES PARTIKELSCHAUMSTOFFTEILS**

METHOD FOR CONTROLLING A STEP OF A PROCESS AUTOMATICALLY CARRIED OUT USING A MACHINE AND A METHOD FOR PRODUCING A PARTICLE FARM PART

PROCÉDÉ DE COMMANDE D’UNE ÉTAPE D’UN PROCESSUS EXÉCUTÉ AUTOMATIQUEMENT PAR UNE MACHINE ET PROCÉDÉ DE FABRICATION D’UNE PIÈCE EN MOUSSE DE PARTICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2014 DE 102014117332**

(43) Veröffentlichungstag der Anmeldung:
**25.10.2017 Patentblatt 2017/43**

(73) Patentinhaber: **Kurtz GmbH & Co. KG**
**97892 Kreuzwertheim (DE)**

(72) Erfinder:
- **ROMANOV, Victor**
  **97877 Wertheim (DE)**
- **KEMMER, Constantin**
  **97828 Marktheidenfeld (DE)**
- **KURTZ, Maximilian**
  **97072 Würzburg (DE)**
- **REUBER, Norbert**
  **97851 Bergrothenfels (DE)**

(74) Vertreter: **HGF**
**HGF Europe LLP**
**Neumarkter Straße 18**
**81673 München (DE)**

(56) Entgegenhaltungen:
**EP-A1- 0 485 714**
**CH-A5- 668 033**
**DE-C1- 3 541 258**
**JP-A- S60 112 430**
**US-A1- 2004 010 068**

EP 3 234 704 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Processed by Luminess, 75001 PARIS (FR)

## Beschreibung

Die vorliegende Erfindung betrifft ein Verfahren zum Steuern eines Schrittes eines mit einer Maschine automatisch ausgeführten Prozesses und ein Verfahren zum Herstellen eines Partikelschaumstoffteils.

Partikelschaumstoffteile auf Basis thermoplastischer Polyurethane sind aus der WO 94/20568 bekannt. Diese Partikelschaumstoffteile werden aus expandierbaren, partikelförmigen, thermoplastischen Polyurethanen hergestellt. Zur Formteilherstellung werden die vorgeschäumten, gegebenenfalls druckbeladenen thermoplastischen Polyurethanpartikel in eine beheizbare Form gegeben und soweit erhitzt, dass die Partikel miteinander verschweißt werden. Das Erhitzen erfolgt durch Beaufschlagen mit Wasserdampf. Wenn nötig, kann vor der Formteilherstellung eine Druckbeladung der Partikel erfolgen. Nach dem Entformen soll das Formteil bis zur Gewichtskonstanz getempert werden. Die Temperierung erfolgt bei Temperaturen von 20-120°C. Die thermoplastischen Polyurethanpartikel können mit einem Treibmittel, wie zum Beispiel Butan oder $CO_2$, versehen sein. Als Treibmittel können auch feste Treibmittel verwendet werden, die beim Erwärmen Gas abspalten, wie Azolcarbonamid oder p-Toluolsulfonsäurehydracit.

Aus der WO 2014/011537 A1 geht ein Verfahren zum Herstellen von Schuhsohlen aus thermoplastischen Polyurethan-Schaumstoffpartikeln hervor. Weitere Verfahren zum Herstellen von Partikelschaumstoffteilen gehen aus der DE 1 243 123 A, der DE 1 704 984 A, der US 4,822,542 und der US 6,220,842 B1 hervor.

Der Vorteil von Partikelschaumstoffteilen aus Partikeln auf Basis von thermoplastischem Polyurethan (TPU-Partikel) liegt in der hohen Elastizität im Vergleich zu Partikelschaumstoffteilen auf Basis von anderen Kunststoffen, insbesondere Polystyrol und Polypropylen.

Es wurden deshalb große Anstrengungen unternommen, derartige Partikelschaumstoffteile auf Basis von Polyurethan der Massenfertigung zugänglich zu machen. Insbesondere sind derartige Partikel Schaumstoffe auf Basis von Polyurethan aufgrund ihrer mechanischen Eigenschaften für Schuhsohlen von größtem Interesse.

Die Herstellung von Schuhsohlen aus geschäumten Partikeln aus thermoplastischem Polyurethan geht auch aus der WO 2012/065926 A1 hervor. Die geschäumten Polyurethanpartikel werden hierbei in ein Matrixmaterial eingebettet, das aus einem Polyurethanschaum besteht. Hier wird somit ein Hybridmaterial ausgebildet. Aufgrund der Eigenschaften der geschäumten Polyurethanpartikel weisen die Schuhsohlen gute Dämpfungseigenschaften auf, können mit geringer Kraft gebogen werden und besitzen hohe Rückstellkräfte ("higher rebound resilience").

In der WO 2013/013784 A1 ist ein weiteres Verfahren zur Herstellung einer Sohle oder eines Sohlenteiles eines Schuhes beschrieben, bei dem die Sohle aus geschäumtem, thermoplastischem Elastomer auf Urethanbasis (TPU, E-TPU, TPE-U) und/oder auf der Basis von Polyether-Block-Amid (PEBA) ausgebildet ist. Die Schaumstoffpartikel werden vorzugsweise mit einem Bindemittel verbunden. Als Bindemittel wird ein Zwei-Komponenten-Polyurethan-System verwendet.

In der WO 2010/010010 A1 sind expandierbare, treibmittelhaltige thermoplastische Polymer-Blends offenbart, die thermoplastisches Polyurethan (TPU) und Styrolpolymerisat enthalten. Die bevorzugten Gewichtsanteile von thermoplastischem Polyurethan liegen zwischen 5 und 95 und die Gewichtsanteile von Styrolpolymerisat zwischen 5 und 95, wobei sich die Gewichtsanteile von thermoplastischem Polyurethan und Styrolpolymerisat zu 100 Teilen addieren. Der Polymer-Blend kann ein weiteres thermoplastisches Polymer enthalten.

Aus der WO 2013/182555 A1 ist ein Verfahren zum Herstellen eines Partikelschaumstoffteils aus thermoplastischen Polyurethanpartikeln bekannt, bei dem die Schaumstoffpartikel zur Beförderung in einem Gasstrom mit einem Wasser enthaltenden Gleitmittel benetzt werden. Hierdurch soll ein Verkleben der Schaumstoffpartikel während des Transportes vermieden werden. Die Schaumstoffpartikel werden mittels Düsen mit Wasser bespritzt.

In der WO 2014/128214 A1 ist ein Verfahren und eine Vorrichtung zur Herstellung eines Partikelschaumstoffteils beschrieben, bei dem Schaumstoffpartikel von einem Materialbehälter mittels einer Leitung zu einem Formwerkzeug zugeführt werden, wobei den zuzuführenden Schaumstoffpartikeln Wasserdampf hinzugegeben wird.

Aus der DE 196 37 349 A1 geht eine Vorrichtung zum Sintern von schäumbarem Kunststoffmaterial hervor. Als Kunststoffmaterial wird vorgeblähtes Polystyrol verwendet, das aus einem Vorratsbehälter einer Sinterkammer zugeführt wird. Eine Sinterkammer ist von mehreren Dampfkammern umgeben. Mit Sensoren werden die im Bereich jeder einzelnen Dampfkammer herrschende Temperatur an der Sinterkammer, der dort herrschende Schäumdruck, sowie der in der Sinterkammer vorliegende Dampfdruck erfasst und an eine Steuerung weitergegeben. Die Temperatur, der Schäumdruck und der Dampfdruck jeder einzelnen Dampfkammer sollen dabei derart geregelt werden, dass beim Erreichen eines Sollwertes durch entsprechende Veränderung der Dampfzufuhr in die zugehörige Dampfkammer der erreichte Sollwert in verhältnismäßig engen Grenzen konstant gehalten wird. Wenn alle Dampfkammern ihre Sollwerte für Temperatur und für den Dampfdruck erreicht haben oder eine Maximalzeit abgelaufen ist, werden die Dampfkammern gekühlt, so dass sich der geschäumte Kunststoffteil verfestigt.

In der EP 224 103 B1 ist ein adaptives Steuerverfahren zum Schäumen und Sintern von aus vorexpandiertem Kunststoffmaterial ausgebildeten Kunststoffkörpern beschrieben. Die Sintervorrichtung weist eine Sinterkammer auf, die von zwei Dampfkammern umgeben ist und mit diesen durch eine Vielzahl von Düsen verbunden ist. Die Sintervorrichtung ist mit einer Vielzahl von Druck- und Temperatursensoren im Bereich der Sinterkammer, der Dampfkammern, des Dampferzeugers, eines Drucklufterzeugers und eines Vakuumerzeugers vorgesehen. Weiterhin können die im Sinterprozess erzeugten Kunststoffteile einer Qualitätsmessung zugeführt werden. Die Qualitätskennwerte sind die Formgenauigkeit, der Feuchtigkeitsgehalt, die Biegefestigkeit und die Oberflächenrauigkeit oder -festigkeit. Mithilfe der Qualitätskennwerte und dem Verfahren der statistischen Variation der Steuerkriterien können diese selbsttätig optimal eingestellt werden.

Die DE 32 43 632 A1 betrifft ein Verfahren und eine Vorrichtung zur Sinterung von Partikelschaumstoffkörpern. Mit diesem Verfahren sollen unterschiedliche Formlinge aus verschiedenartigen schäumbaren Kunststoffen hergestellt werden können. Da die Materialien in der Anlieferung erheblichen Toleranzen unterliegen und sich z. B. in der Feuchtigkeit und im Treibgasgehalt abhängig vom Vorschäumen und Zwischenlagern unterscheiden, werden aus gemessenen Temperatur- und Druckwerten während der Verarbeitung Kennwerte ermittelt, die zur laufenden Bestimmung von Vorgabewerten bzw. deren Korrektur dienen. Die Kennwerte und die neuen Vorgabewerte werden dabei mit vorgegebenen, materialspezifischen Grenzwerten und/oder Mittelwerten verglichen und Überschreitungen bzw. Abweichungen an die Materialzufuhr als Alarm- oder Steuersignal weitergegeben. Hierdurch sollen Toleranzen in den Materialeigenschaften als auch Schwankungen der Zustände der anderen Versorgungsmedien und die unterschiedlichen Zustände der Form im Anfahr- und Dauerbetrieb durch die Betriebssteuerung ausgeglichen werden, sodass Formlinge mit weitgehend gleichen Formteileigenschaften erhalten werden. Die vorgegebenen Kennwerte entsprechen einer bestimmten Dichte, Festigkeit, maximalen Feuchtigkeit und Formgenauigkeit. Zudem soll die Prozesszeit nicht unnötig verlängert und der Energieeinsatz nicht extrem erhöht werden. Es sind Messeinrichtungen zur Erfassung der Formteileigenschaften an den fertigen Formlingen vorgesehen, deren Messdaten zur Rückmeldung und zum Vergleich mit den vorgegebenen Formteileigenschaften dienen, wobei aus dem Vergleichsergebnis eine Korrektur des Prozessablaufes gesteuert wird, sofern unzulässige Abweichungen auftreten. Hierdurch wird eine Selbstoptimierung des Prozesses bewirkt.

Bei einer aus der EP 192 054 B bekannten Vorrichtung wird aus einem Druck- und Temperaturverlauf in der Sinterkammer ein Erweichungszeitpunkt des Kunststoffs bestimmt. Nach diesem Erweichungszeitpunkt und einem dazugehörigen Sinterdruck oder einer Sintertemperatur wird eine maximale Entformungstemperatur bestimmt, unterhalb der das Kunststoffteil der Form entnommen werden kann. Hierdurch wird eine besonders schnelle Prozessabfolge erreicht.

Aus der EP 1 813 408 A1 geht ein Verfahren zum Befüllen von Formwerkzeugen mit expandierten Polymerpartikeln hervor. Hierbei ist vorgesehen, dass eine Füllvorrichtung oder die an ihr angebrachte Zufuhr einer Partikel-Trägergas-Mischung mit mindestens einer Messvorrichtung für die Strömungsrichtung oder die Temperatur einer Polymer-Partikel-Trägergas-Mischung versehen ist. Die Messvorrichtung kann ein Strömungssensor bzw. ein Temperatursensor sein. Weiterhin kann die Messvorrichtung mit einer automatisierten Steuerung derart verbunden sein, dass in Abhängigkeit des von der Messvorrichtung erhaltenen Signals die Zufuhr von Partikel-Trägergas-Mischung und gegebenenfalls Wasserdampf unterbrochen wird und gegebenenfalls eine Injektorgaszufuhr zum Spülen der Leitungen öffnet. Weiterhin kann die Füllvorrichtung die Zufuhr der Polymer-Partikel-Trägergas-Mischung beenden sobald die Messvorrichtungen anzeigen, dass das Formwerkzeug mit den Polymerpartikeln befüllt ist.

In der DE 35 41 258 C1 ist ein adaptives Steuerverfahren zum Schäumen und Sintern von Kunststoff beschrieben. Eine Sintervorrichtung zum Ausführen dieses adaptiven Steuerverfahrens soll mehrere Sensoren für verschiedene Parameter aufweisen. Gemäß diesem Verfahren ist vorgesehen, dass der Injektionsvorgang beendet wird, wenn ein Druckmesswert an einem Injektordrucksensor um einen vorgegebenen Wert gegenüber einem Druckmesswert, der kurz nach Beginn des Injizierens gemessen wurde, angestiegen ist. Das Heizen soll beendet werden, wenn Kondensat-Temperaturen an Temperatursensoren über einer vorgegebenen Kondensat-Temperatur liegen. Das Querbedampfen soll beendet werden, wenn ein Differenzdruck einen bestimmten vorgegebenen Wert erreicht hat. Das Sintern soll beendet werden, wenn der Differenzdruck während der Sinterzeit ein Maximum oder einen bestimmten vorgegebenen Wert oder ein Kammerdruck einen bestimmten Wert überschritten hat und danach eine vorbestimmte Zeit vergangen ist. Demgemäß sind bei diesem Verfahren zwei verschiedene Steuerkriterien entscheidend, nämlich das Druckkriterium und ein Zeitkriterium. Gemäß einer alternativen Ausführungsform kann das Ende der Sinterphase auch aus einer Differenztemperatur bestimmt werden, indem ein Zeitpunkt des Differenztemperaturmaximums bestimmt wird und danach eine Wartezeit gemäß einem Zeitkriterium angehängt wird. Auch durch dieses Maximum soll es möglich sein, einen bestimmten Sinterzustand weitgehend unabhängig von der Formverarbeitung des eingesetzten Materials zu erhalten. Demgemäß werden wohl sämtliche Phasenzeiten entsprechend vorgegebener Maximalzeiten begrenzt, damit z.B. im Falle dass ein Sensor versagt, der Prozess dennoch weiterläuft.

Aus der JP 2001-341 149 A1 geht ein Verfahren zum Formen von Harz hervor. Gemäß diesem Verfahren ist vorgesehen, den Formdruck der Partikel während des Aufschäumens beim Aufheizen und einen Dampfdruck derart zu detektieren, das eine optimale Schaumdruckkurve, in der die detektierten Werte der vorher definierten optimalen Schaumdruckkurve entsprechen. Dies wird mittels entsprechender Drucksensoren, die an einem Auswerferpin angeordnet sind, realisiert.

In der US 2004/010068 A1 sind ein Verfahren und eine Vorrichtung zum Steuern eines Vulkanisationsprozesses offenbart. Diesem Patentdokument liegt das Problem zu Grunde, dass es bei der Vulkanisation von Gummi schwierig ist, den Grad der Vulkanisation zu messen. Um den Grad der Vulkanisation besser bestimmen zu können, ist ein spezieller Sensor vorgesehen, um die Impedanz des Gummis während der Vulkanisation zu messen. Zunächst wird eine Vielzahl von Messungen bei unterschiedlichen Produktionsbedingungen mittels dieses Impedanzsensors und eines herkömmlichen Rheometers durchgeführt. Die mit dem Rheometer erzeugten Messwerte werden mit den mittels des Impedanzsensors gemessenen Impedanzwerten korrelliert. Anhand der Korrelation können den Impedanzwerten vorbestimmte Zeitdauern des Vulkanisationsprozesses zugeordnet werden, welche einem bestimmten Aushärtezustand entsprechen. Durch die Messung der Impedanzen während der Produktion soll es möglich sein, die Produktionszeit optimal einzustellen. Es liegt ein linearer Zusammenhang zwischen der Impedanz und der Produktionszeit vor.

Aus der DE 3 541 258 C1 geht ein adaptives Steuerverfahren zum Schäumen und Sintern von Kunststoff hervor. Insbesondere ist vorgesehen, den Beginn und das Ende eines Bearbeitungsschritts durch das Erreichen von bestimmten Steuerparametern, die Vergleichswerte von beispielsweise Drücken, Temperaturen und/oder Zeitabläufen im Sinterprozess sind, zu bestimmen. Vorzugsweise soll als vorbestimmter Steuerparameter ein Differenzdruck oder eine Differenztemperatur zwischen Sinterkuchen und der Dampfkammer bzw. der Formwand vorgegeben werden. Anhand statistischer Auswertungen soll es möglich sein, den Anfangs- und den Endzyklus eines Bearbeitungsschrittes zu bestimmen.

In der EP 0 485 714 A1 ist ein Steuerverfahren zum Schäumen und Sintern von Kunststoff offenbart. Dabei sollen zunächst der Druck und die Temperatur des der Vorrichtung zugeführten Dampfes gemessen werden. Anschließend wird in relativ kurzen Intervallen die in die Vorrichtung eingeleitete Dampfmasse berechnet. Anschließend soll während einzelner Bedampfungsphasen die Dampfmasse auf vorgegebene Werte eingestellt werden. Diese Einstellung soll durch Verlängern oder Verkürzen der Bedampfungsphase erfolgen. Somit soll es möglich sein, Schwankungen in den Eigenschaften der Schaumstoffkörper zu vermindern und dadurch die Qualität der Schaumstoffkörper zu erhöhen, ohne unwirtschaftlich große Dampfmengen zu verwenden.

Aus der JP S60112430 A geht ein Steuerverfahren zum Steuern eines Schäumvorgangs von Polystyrol bzw. Styropor hervor. Hierbei ist vorgesehen, dass bei Erreichen einer vorbestimmten Temperatur das Produkt dem Formraum entnommen wird.

Der Erfindung liegt die Aufgabe zugrunde, einen Schritt eines mit einer Maschine automatisch ausgeführten Verfahrens derart zu steuern, dass der Schritt hinsichtlich Effizienz des Verfahrens als auch Präzision des Verfahrens optimal gesteuert wird.

Eine weitere Aufgabe der Erfindung ist es einen Schritt eines mit einer Maschine automatisch durchgeführten Herstellungsverfahrens derart zu steuern, dass der Schritt hinsichtlich Effizienz des Herstellungsverfahrens als auch Qualität eines mit dem Herstellungsverfahrens herzustellenden Produkts optimal ausgeführt werden kann.

Eine weitere Aufgabe der vorliegenden Erfindung ist ein Verfahren zur Herstellung eines Partikelschaumstoffteils zu schaffen, mit welchen eine sehr effiziente Herstellung der Partikelschaumstoffteile erzielt wird.

Eine weitere Aufgabe der vorliegenden Erfindung ist ein Verfahren zur Herstellung eines Partikelschaumstoffteils zu schaffen, mit welchem Partikelschaumstoffteile mit hoher Qualität erzeugt werden können.

Eine weitere Aufgabe der vorliegenden Erfindung ist ein Verfahren zur Herstellung eines Partikelschaumstoffteils zu schaffen, mit welchem Partikelschaumstoffteilen unterschiedlicher Größe und/oder unterschiedlicher Form zuverlässig herstellbar sind.

Eine weitere Aufgabe der vorliegenden Erfindung ist ein Verfahren zur Herstellung eines Partikelschaumstoffteils zu schaffen, das einen oder mehrere der Nachteile des Standes der Technik beseitigt.

Eine oder mehrere der Aufgaben werden durch ein Verfahren gemäß den unabhängigen Ansprüchen gelöst. Vorteilhafte Ausgestaltungen sind in den jeweiligen Unteransprüchen angegeben.

Das Verfahren zum Steuern eines Schrittes eines mit einer Maschine automatisch ausgeführten Prozesses zeichnet sich dadurch aus, dass mit einem Sensor eine für einen Schritt charakteristische Größe gemessen wird, welche einen exponentiellen Verlauf aufweist, und anhand mehrerer aufeinanderfolgender Messungen der charakteristischen Größe die Zeitkonstante der exponentiellen Änderung bestimmt wird, und der Schritt beendet wird, nachdem er eine Zeitdauer durchgeführt wurde, die einem vorbestimmten Vielfachen der Zeitkonstante entspricht.

Beim erfindungsgemäßen Verfahren wird ein Schritt eines Prozesses anhand der charakteristischen Größen gesteuert. Die charakteristische Größe beschreibt einen wesentlichen Zustand der Maschine, eines mit der Maschine herzustellenden oder zu bearbeitenden Produktes oder eines mit der Maschine zu beeinflussenden physikalischen Zustandes, wobei die charakteristische Größe insbesondere mit einem Endzustand, der durch Ausführung des Schrittes erzielt werden soll, korreliert. Weiterhin hat die charakteristische Größe die Eigenschaft, dass sie sich während des Prozesses exponentiell verändert. Die Veränderung der charakteristischen Größe kann oftmals sehr unterschiedlich sein. Ist die charakteristische Größe eine Temperatur, dann kann deren Verlauf beispielsweise von der Raumtemperatur des Raumes, in dem sich die Maschine befindet, abhängen. Sie kann auch von der Art und der Qualität von zu bearbeitenden Materialien, die bei dem Prozess eingesetzt werden, abhängen. Auch kann der Verlauf der Änderung der charakteristischen Größe beispielsweise vom Volumen eines herzustellenden Produktes abhängen.

Die Erfinder der vorliegenden Erfindung haben erkannt, dass durch Bestimmung der Zeitkonstante einer exponentiellen Änderung der charakteristischen Größe die Zeitdauer eines mit einer Maschine automatisch auszuführenden Schrittes derart individuell einstellbar ist, dass der Zielzustand immer korrekt eingehalten wird. Hierdurch wird der Schritt hinsichtlich des hiermit zu erzielenden Ergebnisses optimal ausgeführt. Andererseits wird durch Verwendung der Zeitkonstante zum Einstellen der Zeitdauer des Schrittes der Schritt selbst nur so lange ausgeführt, wie es notwendig ist. Dies bedeutet, dass die Zeitdauer so eingestellt wird, dass das gewünschte Ziel erreicht wird, jedoch nicht länger. Hierdurch wird der Schritt zeitlich effizient ausgeführt. Die Betriebszeit einer Maschine verursacht Kosten. Durch die zeitlich effiziente Ausführung des Schrittes werden diese Kosten gering gehalten. Der gesamte Prozess wird hierdurch zeitlich optimiert.

Das Verfahren ist ein Gießverfahren sein welches die folgenden Schritte umfasst:

- Füllen eines Formraums mit einem zu verfestigendem Material,
- Abkühlen des Formraums (Stabilisierungsschritt)
- Entformen des Formraums.

Während des Stabilisierungsschrittes kann das Formwerkzeug und/oder der Bauteilkörper gekühlt werden, bspw. durch Zuführen von Kühlwasser oder Kühlluft in in dem Formwerkzeug ausgebildeten Kühlkanälen.

Die charakteristische Größe des Stabilisierungsschrittes kann die Temperatur im Formraum oder die Temperatur des Formwerkzeuges ist.

Der Prozess kann ein Herstellungsprozess sein, um ein bestimmtes Produkt herzustellen. Der Prozess jedoch auch ein Bearbeitungsprozess sein, um ein bereits bestehendes Produkt mit einer Maschine zu verändern und in einen gewünschten Zustand zu bringen.

Der Prozess kann zum Beispiel auch die Klimatisierung eines Raumes sein, wie zum Beispiel eines Fahrgastinnenraumes eines Kraftfahrzeuges. Die Klimatisierung eines Fahrgastinnenraumes eines Kraftfahrzeuges ist äußerst komplex und hängt von vielen Parametern (Sonneneinstrahlung, verfügbare Abwärme einer Brennkraftmaschine, etc.) ab. Andererseits möchte man möglichst schnell eine gewisse Zieltemperatur im Kraftfahrzeug einstellen ohne hierbei ein Überschwingen zu verursachen. Als charakteristische Größe wird eine Temperatur im Fahrgastinnenraum erfasst, wobei die Temperatur mit einem oder mit mehreren Sensoren erfasst werden kann. In Abhängigkeit von der Änderung der Temperatur des Fahrgastinnenraums wird die Strömungsgeschwindigkeit eines temperierten Luftstromes, der in den Fahrgastinnenraum strömt, gesteuert.

Das Verfahren ist zum Herstellen von Partikelschaumstoffteilen vorgesehen sein, das die folgenden Schritte umfasst:

- Füllen eines Formraums mit Schaumstoffpartikeln
- Verschweißen der Schaumstoffpartikel zu einem Partikelschaumstoffteil
- Entformen des Formraums, wobei der Formraum geöffnet und das Partikelschaumstoffteil entnommen wird.

Nach einem Aspekt zeichnet sich die Erfindung dadurch aus, dass mit einem Sensor eine für einen Schritt oder einen Teilschritt des Verfahrens charakteristische Größe gemessen wird, welche einen exponentiellen Verlauf aufweist, wobei anhand mehrerer aufeinanderfolgender Messungen der charakteristischen Größe die Zeitkonstante der exponentiellen Änderungen bestimmt und der Schritt beendet wird, nachdem er für eine Zeitdauer durchgeführt wurde, die einem vorbestimmten Vielfachen der Zeitkonstante entspricht.

Bei diesem Verfahren wird somit die Zeitdauer, mit welcher der Schritt bzw: Teilschritt des Verfahrens durchgeführt wird, individuell bestimmt. Dieser Erfindung liegt die Erkenntnis zugrunde, dass eine charakteristische Größe, die sich gemäß einem exponentiellen Verlauf ändert, zunächst stark ändert und sich dann allmählich einem Sollwert bzw. Endzustand annähert. Nach einem bestimmten Vielfachen der Zeitkonstante ist sichergestellt, dass die charakteristische Größe sich auf einen bestimmten, geringen prozentualen Anteil an Sollwert diesem genähert hat. Der Sollwert ist der Wert, den die charakteristische Größe einnehmen würde, wenn der Schritt unendlich lange ausgeführt werden würde. Den Sollwert kann man deshalb auch als Endzustand bezeichnen.

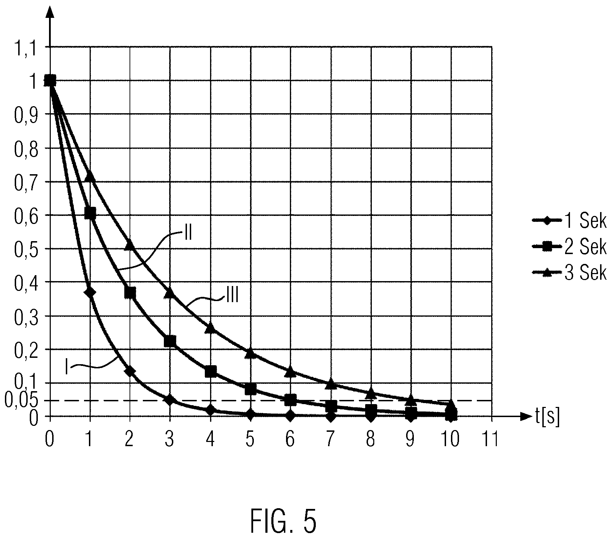

Figur 5 zeigt drei exponentiell abfallende Kurven I, II und III, wobei für diese drei Kurven gemäß der oben angegebenen Formel K=1 und C=0 gilt, weshalb der Anfangszustand 1 und der Endzustand 0 ist. Die Kurve I weist eine Zeitkonstante $\tau$ von 1 s, die Kurve II eine Zeitkonstante $\tau$ von 2 s und die Kurve III eine Zeitkonstante $\tau$ von 3 s auf. Auf der Abszisse ist die Zeit in Sekunden aufgetragen und die Ordinate zeigt eine an sich beliebige Messgröße. Alle drei Kurven beginnen somit zum Zeitpunkt 0 beim Wert 1. Nach $3\tau$ beträgt der Wert jeweils 0,05, d.h., dass er um 95% reduziert ist bzw. nur noch 5% vom Endzustand entfernt ist, der hier 0 ist.

Dieser Schritt oder Teilschritt des Verfahrens wird somit solange durchgeführt, bis die charakteristische Größe ausreichend nahe am Sollwert ist. Hierdurch wird sichergestellt, dass das Ziel dieses Schrittes oder Teilschrittes in einem ausreichenden Maße erreicht wird. Andererseits wird dieser Schritt oder Teilschritt nicht länger als die Zeitdauer, die der vorbestimmten Vielfachen der Zeitkonstanten entspricht, ausgeführt, sodass sich dieser Schritt oder Teilschritt nicht unnötig in die Länge zieht. Hierdurch wird gegenüber herkömmlichen Verfahren, bei welchen die Zeitdauer eines Schrittes oder Teilschrittes auf einen festen Wert eingestellt ist, erheblich Zeit eingespart und das gesamte Verfahren wird hierdurch effizienter.

Ein weiterer Vorteil dieses Verfahrens ist, dass der Sollwert nicht explizit vorgegeben werden muss. Dieser ergibt sich automatisch aus der Tatsache, dass die charakteristische Größe sich mit einem exponentiellen Verlauf ändert. Es ist somit nicht notwendig, beim Einrichten des Systems einen Sollwert vorab festzulegen.

Ein weiterer Vorteil dieses Verfahrens liegt darin, dass sich bei bestimmten Schritten oder Teilschritten des Verfahrens bestimmte Eigenschaften des zu verarbeitenden Materials verändern, wobei diese Veränderung der Eigenschaften von der Dauer abhängt, mit welcher dieser Schritt oder Teilschritt angewendet wird. Unten wird als ein Beispiel dieses Verfahrens die Steuerung einer Querbedampfung näher beschrieben, bei welcher ein Dampfverbrauch als charakteristische Größe verwendet wird. Bei der Querbedampfung verringert sich aufgrund der zunehmenden Verschweißung der Schaumstoffpartikel mit zunehmender Dauer der Querbedampfung die Durchlässigkeit bzw. Porosität. Durch die zeitliche Steuerung der Querbedampfung mittels Bestimmung der Zeitkonstante des Dampfverbrauches wird sichergestellt, dass am Ende des Schrittes der Querbedampfung immer etwa die gleiche Porosität bzw. Durchlässigkeit an dem Partikelschaumstoffteil vorliegt. Hierdurch kann mit diesem Verfahren die Herstellung unterschiedlich großer oder unterschiedlich dicker Schaumstoffpartikelteile automatisch gesteuert werden, ohne dass die Zeitdauer individuell bestimmt und eingestellt werden muss. Es kann somit in einer Maschine das Formwerkzeug für unterschiedliche Partikelschaumstoffteile ausgetauscht werden, ohne dass die Zeitdauer des Verfahrensschrittes der Querbedampfung hierfür manuell justiert werden muss, wobei Partikelschaumstoffteile mit gleichbleibender Qualität erhalten werden.

Typischerweise liegt das vorbestimmte Vielfache der Zeitkonstanten beim Zwei- bis Vierfachen.

Als charakteristische Größen können der Druck und/oder die Temperatur im Formraum verwendet werden. Dies gilt insbesondere für das Verschweißen mit den Teilschritten Autoklavieren, Nachbedampfen (optional), Kühlen und Stabilisieren. Weiterhin kann der Dampfverbrauch beim Querdampfen als charakteristische Größe verwendet werden.

Ein exponentieller Verlauf einer charakteristischen Größe G wird durch folgende Formel beschrieben:

$$G = K \cdot e^{\frac{t_0 - t}{\tau}} + C,$$

wobei t die Zeit, $t_0$ die Anfangszeit, K eine Konstante, C eine weitere Konstante und $\tau$ die Zeitkonstante ist. Diese Funktion ist für alle t definiert, die größer oder gleich $t_0$ sind. Der Anfangszustand ist K+C und der Endzustand ist C. K kann sowohl positiv als auch negativ sein, so dass sich G an den Endzustand C von oben als auch von unten nähern kann.

Die Zeitkonstante $\tau$ kann anhand von zumindest drei zu unterschiedlichen Zeiten t gemessenen Werten von G bestimmt werden. Die Zeitkonstante $\tau$ kann mit dem Levenberg-Marquardt-Algorithmus bestimmt werden.

Weiterhin können die Schaumstoffpartikel in einem Vorratsbehälter einer Druckbeladung unterzogen werden. Dies bedeutet, dass der Gasdruck im Vorratsbehälter, in dem sich die Schaumstoffpartikel befinden, erhöht wird. Hierdurch werden die Schaumstoffpartikel zunächst zusammengedrückt. Das Gas diffundiert in die Schaumstoffpartikel, die auch als Perlen bezeichnet werden, wodurch die Schaumstoffpartikel wieder expandieren. Diese Expansion wird gemessen. Das Messen der Expansion kann beispielsweise anhand des Füllstandes des Vorratsbehälters erfasst werden. Dies ist somit eine zur Beschreibung der mittleren Größe der Schaumstoffpartikel geeignete Größe. Diese mittlere Größe der Schaumstoffpartikel kann als charakteristische Größe verwendet werden, wobei die Druckbeladung beispielsweise nach dem zwei- bis vierfachen der Zeitkonstante beendet wird. Durch Verwendung einer für die Beschreibung der mittleren Größe der Schaumstoffpartikel geeigneten Größe als charakteristische Größe ist es möglich, beliebige Mengen an Schaumstoffpartikelmaterial der Druckbeladung zu unterziehen, ohne dass hierbei manuell eingegriffen werden muss.

Während der Stabilisierung werden das Formwerkzeug und/oder der Partikelschaumstoffkörper gekühlt.

Die Querbedampfung ist ein Teilschritt des Verschweißens, bei welcher den Schaumstoffpartikeln Wasserdampf zugeführt wird. Der Wasserdampf wird hierbei an einer Seite des Formwerkzeuges eingeleitet und an der anderen Seite des Formwerkzeuges abgezogen, sodass Luft, die sich in Zwickeln zwischen den Schaumstoffpartikeln befindet, aus dem Formraum verdrängt wird. Beim Querbedampfen kann als charakteristische Größe auch der Druck oder die Temperatur im Formraum verwendet werden.

Nach einem weiteren Aspekt der vorliegenden Erfindung zeichnet sich das Verfahren zum Herstellen von Partikelschaumstoffteilen dadurch aus, dass die Schaumstoffpartikel intermittierend aus einem Materialbehälter abgezogen werden.

Durch das intermittierende Abziehen der Schaumstoffpartikel werden Brücken, die sich im Materialbehälter zwischen den Schaumstoffpartikeln ausgebildet haben, aufgebrochen und die Schaumstoffpartikel vereinzelt. Dieses Verfahren ist insbesondere bei Schaumstoffpartikeln mit einer adhäsiven Oberfläche, wie z. B. eTPU-Schaumstoffpartikeln, vorteilhaft.

Zum intermittierenden Abziehen der Schaumstoffpartikel aus dem Materialbehälter kann eine Öffnung des Materialbehälters aufeinanderfolgend geöffnet und geschlossen und/oder die Luft zum Fördern der Schaumstoffpartikel in der Leitung intermittierend zugeführt werden.

Nach einem weiteren Aspekt der vorliegenden Erfindung wird ein Verfahren zum Herstellen von Partikelschaumstoffteilen vorgesehen, bei dem zu Beginn des Zuführens von Wasserdampf im Formraum die Formteile ein Stück beabstandet sind (Crack-spalt) und dann die beiden Formteile zusammengefahren werden, wodurch die Schaumstoffpartikel verdichtet werden. Dieses Verfahren zeichnet sich dadurch aus, dass zwei Formteile verwendet werden, die auch bei beabstandeter Anordnung zueinander abgedichtet sind. Da das Formwerkzeug auch bei Vorhandensein eines Crackspaltes am peripheren Umfang im Wesentlich gasdicht abgedichtet ist, wird die Luft in den Zwickeln zwischen den Schaumstoffpartikeln sehr effizient durch den Wasserdampf verdrängt. Da das Formwerkzeug noch mit einem Crackspalt eingestellt ist, sind die Zwickel relativ groß, wodurch der Strömungswiderstand gering ist und ein wesentlich schnelleres Verdrängen der Luft erzielt wird, als dies bei vollständig geschlossenem Formwerkzeug der Fall wäre. Durch das Abdichten am peripheren Umfang entweicht der Dampf nicht seitlich am Formwerkzeug, sondern strömt von einer Seite des Formwerkzeuges zur anderen Seite (Querbedampfung). Hierdurch wird sichergestellt, dass die Luft aus allen Zwickeln verdrängt wird.

Nach einem weiteren Aspekt der vorliegenden Erfindung wird ein Verfahren zum Herstellen von Partikelschaumstoffteilen vorgesehen, das sich dadurch auszeichnet, dass innerhalb eines Zyklus in regelmäßigen Intervallen Messparameter, wie z. B. Temperatur und/oder Druck im Formraum, Temperatur eines den Formraum begrenzenden Formwerkzeuges, Druck und/oder Temperatur und/oder Strömungsmenge eines zu- bzw. abgeführten Dampfes bzw. Kondensates, Ventilstellungen, Strömungsmenge der beim Füllen verwendeten Druckluft, erfasst und anhand der erfassten Messparameter innerhalb desselben Zyklus ein oder mehrere vorbestimmte Stellparameter eingestellt werden.

Bei herkömmlichen Verfahren zum Herstellen von Partikelschaumstoffteilen hat man zwar bisher schon eine Vielzahl von Messparametern erfasst. Man ist jedoch davon ausgegangen, dass es genügt, die einzelnen Messparameter jeweils einmal pro Zyklus oder einige wenige Male pro Zyklus zu erfassen. Dies ist auch korrekt, solange eine Vielzahl identischer Partikelschaumstoffteile hergestellt wird. Dies gilt insbesondere, wenn als Material expandiertes Polystyrol (ePS), expandiertes Polypropylen (ePP) oder expandiertes Polyethylen (ePE) verwendet werden, die im Vergleich zu expandiertem Polyurethan wesentlich einfacher verarbeitbar sind. Wenn man jedoch unterschiedliche große Partikelschaumstoffteile entweder parallel mit mehreren unterschiedlichen Formwerkzeugen oder sequenziell herstellen möchte und hierbei insbesondere Schaumstoffpartikel auf Polyurethanbasis verwendet, dann sind die Prozesse oftmals nicht stabil. Durch das Erfassen einer Vielzahl von Messparametern in regelmäßigen Intervallen kann der Prozess wesentlich präziser gesteuert und innerhalb eines Zyklus reagiert werden, sodass mit diesen Daten eine deutlich höhere Flexibilität bezüglich der Form und Größe der Partikelschaumstoffteile als auch bezüglich des einzusetzenden Materials erzielt wird. Die Messparameter werden vorzugsweise in Intervallen von nicht länger als 10 s und insbesondere nicht länger als 5 s bzw. nicht länger als 2 s erfasst. Ein Beispiel einer Reaktion innerhalb eines Zyklus anhand mehrerer in dem Zyklus gemessener Messparameter ist die oben erläuterte Bestimmung der Zeitkonstante. Beim Bestimmen der zeitlichen Ableitung des Schaumdruckes um ein Nachbedampfen zu beenden, wenn die Änderung des Schaumdruckes unter einem vorbestimmten Wert fällt, stellt eine Reaktion innerhalb eines Zyklus dar, das mehrere Messwerte innerhalb dieses Zyklus erfordert. Ein weiteres Beispiel für eine Reaktion innerhalb eines Zyklus ist das automatische Beenden des Kühlens, wenn der Schaumdruck unter einen vorbestimmten Schwellenwert fällt und etwa konstant ist, oder die zweite Ableitung des Schaumdrucks eine Nullstelle überschritten hat und die erste Ableitung unter einem Schwellenwert liegt.

Mit diesem Verfahren wird vor allem die Dauer der einzelnen Schritte automatisch eingestellt.

Nach einem weiteren Aspekt der vorliegenden Erfindung wird ein Verfahren zum Herstellen von Partikelschaumstoffteilen vorgesehen, bei dem ein oder mehrere Messparameter am entformten Partikelschaumstoffteil gemessen werden und anhand der erfassten Messparameter ein oder mehrere vorbestimmte Stellparameter eingestellt werden.

Hiermit wird somit eine automatische Rückkopplung der am fertiggestellten Partikelschaumstoffteil erfassten Messparameter in den Fertigungsprozess geschaffen. Hierdurch wird sichergestellt, dass die Schaumstoffpartikelteile mit gleichbleibender Qualität hergestellt werden. Somit wird der Prozess wesentlich stabiler.

Die am entformten Partikelschaumstoffteil gemessenen Messparameter sind z. B. die Oberfläche beschreibende Messparameter, insbesondere Messparameter, mit welchen Fehlstellen im Partikelschaumstoffteil detektierbar sind. Weitere am entformten Partikelschaumstoffteil detektierbare Parameter sind Gewicht, Größe, Festigkeit, Porosität.

Mit diesen am entformten Partikelschaumstoffteil detektierten Messparametern werden vorzugsweise die Dauer einzelner bestimmter Schritte oder Teilschritte des Herstellungsprozesses und/oder ein vorbestimmter Druck und/oder eine vorgeschriebene Temperatur automatisch eingestellt.

Ist der am entformten Partikelschaumstoffteil detektierbare Parameter sein Gewicht, wird vorzugsweise in Abhängigkeit des Gewichtes die Breite eines Crackspaltes beim Befüllen des Formraumes mit Schaumstoffpartikeln zur Herstellung eines weiteren Partikelschaumstoffteils in Abhängigkeit von dem gemessenen Gewicht eingestellt. Ist das gemessene Gewicht größer als ein Sollgewicht, dann wird der Crackspalt entsprechend verringert und ist das gemessene Gewicht geringer als das Sollgewicht, dann wird der Crackspalt entsprechend vergrößert. Durch die Einstellung des Crackspaltes kann die dem Formraum zugeführte Menge an Schaumstoffpartikel justiert werden.

Dies ist vorzugsweise bei Verwendung von Schaumstoffpartikeln auf Polyurethanbasis von Vorteil, da hier bereits eine geringe Mengenabweichung von einer Sollmenge an Schaumstoffpartikeln erhebliche Qualitätsunterschiede verursachen kann.

Weiterhin kann am entformten Partikelschaumstoffteil als Messparameter eine geometrische Form detektiert werden. Als solche geometrische Form wird insbesondere der Verlauf einer bestimmten Oberfläche bzw. Kante verstanden. Die Oberfläche weist einen bestimmten Sollverlauf auf, der konkav, ebenflächig oder konvex ausgebildet sein oder mit entsprechenden, unterschiedlichen Abschnitten ausgebildet sein kann. Ist die gemessene geometrische Form stärker konvex als eine Sollform, dann wurden die einzelnen Schaumstoffpartikel zu stark expandiert. Die Expansion der Schaumstoffpartikel kann durch die Dauer des Stabilisierens, Autoklavierens und/oder Kühlens beeinflusst werden. Wird eine zu starke Expansion durch die gemessene geometrische Form detektiert, dann ist das Stabilisieren und/oder Autoklavieren zur verkürzen oder das Kühlen zu verlängern.

Bei den oben erläuterten Verfahren werden beim Füllen Schaumstoffpartikel über eine Förderleitung mittels Druckluft in den Formraum gefördert, wobei nach vollständiger Befüllung des Formraums die Förderleitung freigeblasen wird.

Das Verschweißen der Schaumstoffpartikel umfasst vorzugsweise folgende Schritte:

- Spülen von Dampfkammern,
- Querbedampfen des Formraums, wobei die Querbedampfung in zumindest zwei Teilschritte unterteilt sein kann, in welchen der Dampf in jeweils entgegengesetzter Richtung durch den Formraum geströmt wird (= erste Querbedampfung und zweite Querbedampfung),
- Autoklavieren der Schaumstoffpartikel, wobei sie mit Dampf beaufschlagt werden. Weiterhin kann das Verschweißen der Schaumstoffpartikel eine Nachbedampfung (optional), ein Kühlen des Formwerkzeuges bzw. des Partikelschaumstoffteils, ein Stabilisieren (optional) umfassen.

Am Ende des Verschweißens und vor dem Entformen des Partikelschaumstoffteils kann dieses stabilisiert werden, indem

- Kühlwasser in den Formraum eingespritzt wird und/oder
- Unterdruck an den Formraum angelegt wird und/oder
- das Partikelschaumstoffteil mittels Druckluft vorübergehend zusammengepresst wird und/oder
- das Partikelschaumstoffteil eine vorbestimmte Zeitdauer im Formraum behalten wird.

Durch das Stabilisieren wird sichergestellt, dass die Wände der Schaumstoffpartikel des Partikelschaumstoffteils beim Entformen nicht oder nicht wesentlich plastisch verformt werden. Durch das Stabilisieren wird der Druck innerhalb der Schaumstoffpartikel soweit verringert, dass er beim Lösen des Partikelschaumstoffteils aus den Formhälften des Formwerkzeuges die Schaumstoffpartikel nicht mehr wesentlich expandiert.

Vorzugsweise wird nach dem Entformen ein den Formraum begrenzendes Formwerkzeug und/oder eine in einem Füllinjektor angeordnete Pinole durch Hindurchleiten von Druckluft gereinigt.

Nach einem weiteren Aspekt der vorliegenden Erfindung wird ein Verfahren zum Herstellen von Partikelschaumstoffteilen vorgesehen, das sich dadurch auszeichnet, dass ein den Formraum begrenzendes Werkzeug mit einer Heizeinrichtung zwischen einer jeden zyklischen Wiederholung des Herstellungsprozesses auf eine vorbestimmte Temperatur eingestellt wird.

Durch das Temperieren des Werkzeuges mittels einer Heizeinrichtung ist es nicht notwendig, das Werkzeug mittels Wasserdampf zu temperieren, wodurch der Schritt des Spülens von Dampfkammern verkürzt und damit die Effizienz des Prozesses gesteigert werden kann. Zudem lässt sich die Temperatur des Werkzeuges schneller und präziser und insbesondere mit einer höheren Temperatur einstellen, sodass beim Bedampfen der Schaumstoffpartikel in dem Formraum dem Dampf wenig Wärme beim Einleiten in den Formraum entzogen wird und so ein besserer Wärmeeintrag erzielt wird.

Nach einem weiteren Aspekt der vorliegenden Erfindung wird ein Verfahren zum Herstellen von Partikelschaumstoffteilen vorgesehen, bei dem nach dem Verschweißen der Schaumstoffpartikel und vor dem Entformen des Partikelschaumstoffteils ein Prozessmedium, wie z. B. Druckluft oder Wasserdampf, durch den Formraum geleitet und die Durchflussmenge gemessen wird, sodass anhand der Durchflussmenge die Porosität des Werkstückes bestimmt wird. Die gemessene Porosität ist ein Messparameter, der zur Qualitätsüberwachung und Steuerung des Fertigungsprozesses verwendet werden kann. Diese Porosität kann anhand des Messparameters des Dampfflusses bestimmt werden. Die Messung des Dampfflusses ist jedoch grundsätzlich von Interesse und kann auch während anderer Prozessschritte ausgeführt werden. Die Messung des Dampfflusses erfolgt vorzugsweise indem ein Dampfdruck und eine Dampftemperatur am Einlassventil an einer an den Formraum angrenzenden Dampfkammer und der Dampfdruck, die Dampftemperatur und eine Kondensatmenge an einem Auslassventil einer weiteren an den Formraum angrenzenden Dampfkammer bestimmt werden. Aus diesen Messparametern kann der Dampffluss berechnet werden.

Oben sind mehrere Aspekte der vorliegenden Erfindung erläutert. Diese unterschiedlichen Aspekte können einzeln oder in beliebiger Kombination zueinander verwendet werden.

Im Folgenden wird die Erfindung beispielhaft anhand der Zeichnungen näher erläutert. Die Zeichnungen zeigen beispielhaft in:

Figur 1 schematisch den Aufbau einer Vorrichtung zum Herstellen eines Partikelschaumstoffteils,

Figur 2 ein Formwerkzeug im Querschnitt,

Figur 3 das Formwerkzeug im Längsschnitt entlang der Linie A-A aus Figur 2,

Figur 4 eine Tabelle, die am entformten Partikelschaumstoffteil messbare Messparameter enthält, wobei den Messparametern Stellparameter zugeordnet sind, die mit den jeweiligen Messparametern geregelt werden können,

Figur 5 ein Diagramm, das drei exponentiell abfallende Kurven zeigt,

Figur 6 ein Diagramm, in dem Druckverläufe und Ventilstellungen eines ersten Ausführungsbeispiels zur Erzeugung eines Partikelschaumstoffteils aus ePS dargestellt sind,

Figur 7 ein Diagramm, in dem Druckverläufe eines zweiten Ausführungsbeispiels zur Erzeugung eines Partikelschaumstoffteils aus ePU dargestellt sind,

Figur 8 ein Diagramm, in dem der gemessene Massestrom des Dampfes während des Querbedampfens und des Autoklavierens dargestellt ist, und

Figur 9 eine schematische Darstellung einer Kokille im Querschnitt.

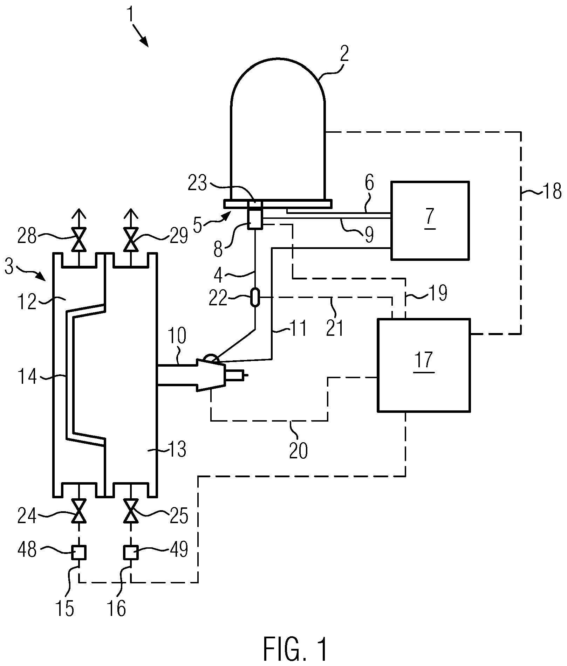

Ein erstes Ausführungsbeispiel einer erfindungsgemäßen Vorrichtung 1 zur Herstellung eines Partikelschaumstoffteils ist in Fig. 1 dargestellt.

Diese Vorrichtung 1 umfasst einen Materialbehälter 2, ein Formwerkzeug 3 und eine Leitung 4, die vom Materialbehälter 2 zum Formwerkzeug 3 führt.

Der Materialbehälter 2 dient zur Aufnahme loser Schaumstoffpartikel. Der Materialbehälter 2 weist einen Boden 5 auf, wobei er im Bodenbereich über eine Druckluftleitung 6 mit einer Druckluftquelle 7 verbunden ist. Die Druckluftleitung 6 ist mit mehreren im Boden 5 angeordneten Düsen (nicht dargestellt) verbunden, so dass in dem Materialbehälter 2 mehrere Luftströme (= Fluidisierluft) eingeleitet werden können, die die darin befindlichen Schaumstoffpartikel verwirbeln und dadurch vereinzeln.

Im Bereich des Bodens 5 des Materialbehälters 2 ist eine Öffnung ausgebildet, an welche die Förderleitung 4 angeschlossen. Die Öffnung ist mittels eines Schiebers 23 verschließbar.

Benachbart zum Materialbehälter 2 befindet sich in der Förderleitung 4 eine Treibdüse 8. Die Treibdüse 8 ist mit einer weiteren Druckluftleitung 9 mit der Druckluftquelle 7 verbunden. Die der Treibdüse 8 zugeführte Druckluft dient als Treibluft, da sie durch die Treibdüse 8 in die Förderleitung 4 eintritt und in Richtung zum Formwerkzeug 3 strömt. Hierdurch wird an der Treibdüse 8 an der zum Materialbehälter 2 weisenden Seite ein Unterdruck erzeugt, der aus dem Materialbehälter Schaumstoffpartikel ansaugt.

Die Förderleidung 4 mündet in einen Füllinjektor 10, der an das Formwerkzeug 3 gekoppelt ist. Der Füllinjektor 10 ist mit einer weiteren Druckluftleitung 11 mit der Druckluftquelle 7 verbunden. Die dem Füllinjektor 10 zugeführte Druckluft wird einerseits zum Füllen des Formwerkzeuges 3 verwendet, indem der Strom von Schaumstoffpartikeln mittels der Druckluft in Richtung zum Formwerkzeug 3 beaufschlagt wird. Andererseits kann die dem Füllinjektor 10 zugeführte Druckluft auch zum Zurückblasen der Schaumstoffpartikel aus der Förderleitung 4 in den Materialbehälter 2 verwendet werden, wenn der Füllvorgang am Formwerkzeug 3 abgeschlossen ist.

Das Formwerkzeug 3 ist aus zwei Formhälften 12, 13 ausgebildet. Zwischen den beiden Formhälften ist zumindest ein Formraum 14 begrenzt, in den der Füllinjektor 10 zum Einbringen der Schaumstoffpartikel mündet. Das Volumen des Formraums 14 kann durch Zusammenfahren der beiden Formhälften 12, 13 verringert werden. Bei auseinandergefahrenen Formhälften 12, 13 ist ein Spalt zwischen den Formhälften 12, 13 ausgebildet, der als Crack-Spalt bezeichnet wird. Deshalb wird ein solches Formwerkzeug 3 auch als Crack-Spalt-Formwerkzeug bezeichnet. Die beiden Formhälften 12, 13 weisen Dampfeinlassventile 24, 25 und Dampfauslassventile 28, 29 auf, welchen von einer Steuereinrichtung (nicht dargestellt) betätigbar sind. Die Dampfauslassventile 28, 29 sind in einer kommunizierenden Verbindung zwischen dem Formraum 14 und der Umgebung angeordnet, so dass Gas aus dem Formraum 14 gesteuert entweichen kann.

Das Formwerkzeug kann auch mehrere Formräume aufweisen, die möglichst unabhängig voneinander bzgl. Füllung, Verdichtung und/oder Erhitzung ansteuerbar sind.

Die beiden Formhälften 12, 13 sind über Dampfleitungen 15, 16 mit einem Dampfgenerator 17 verbunden, um in den Formraum 14 Dampf zum Verschweißen der darin eingebrachten Schaumstoffpartikel zuzuführen. Die Dampfeinlassventile 24, 25 sind in den Endbereichen der Dampfleitungen 15, 16, benachbart zu den Formhälften 12, 13 angeordnet.

Der Dampfgenerator 17 ist mit einer Dampfleitung 18 mit dem Materialbehälter 2 verbunden, um diesem Wasserdampf zuzuführen. Eine weitere Dampfleitung 19 führt vom Dampfgenerator 17 zur Treibdüse 8, so dass dem Strom von Schaumstoffpartikeln Wasserdampf zugeführt werden kann.

Mit einer Dampfleitung 20 ist der Dampfgenerator 17 mit dem Füllinjektor 10 verbunden, sodass dem durch den Füllinjektor 10 strömenden Strom an Schaumstoffpartikeln Wasserdampf zugeführt werden kann.

Es ist eine Dampfleitung 21 vorgesehen, die vom Dampfgenerator 17 zur Förderleitung 4 führt, wobei an einer entsprechenden Anschlussstelle 22 in der Förderleitung 4 eine Injektionsdüse (nicht dargestellt) vorgesehen ist, um Wasserdampf in die Förderleitung 4 einzubringen.

In den Dampfleitungen und Druckluftleitungen sind pneumatisch oder elektrisch ansteuerbare Ventile (nicht dargestellt) vorgesehen, sodass die zugeführte Druckluftmenge oder zugeführte Dampfmenge von einer Steuereinrichtung (nicht dargestellt) exakt gesteuert werden kann.

Die Formhälften 12, 13 weisen jeweils eine Formraumwandung 33, 34 auf. Die Formraumwandungen 33, 34 sind mit ihrer äußeren Oberfläche derart geformt, dass sie der negativen Kontur eines auszubildenden Partikelschaumstoffteiles entsprechen. Die beiden Formraumwandungen 33, 34 der beiden Formhälften 12, 13 können derart zusammengefahren werden, dass sie den Formraum 14 begrenzen, der der Form des herzustellenden Partikelschaumstoffteils entspricht.

In den Formraumwandungen 33, 34 sind eine Vielzahl von Dampfdüsen 35 ausgebildet. Die Dampfdüsen sind Durchgangsöffnungen mit einem Durchmesser, der ausreichend groß ist, um Dampf hindurch zu lassen, jedoch kleiner als die zu verschweißende Schaumstoffpartikel ist.

Die Formteile 12, 13 weisen jeweils eine Dampfkammer 36, 37 auf, die durch die Formraumwandungen 33, 34, weiteren Umwandungen 38, einem Dampfeinlasskanal 39 und einem Dampfauslasskanal 40.

Die Formhälften 12, 13 sind etwa quaderförmige Körper, wobei der Dampfeinlasskanal 39 und der Dampfauslasskanal 40 sich entlang zweier gegenüberliegender Stirnseiten erstrecken. Der Dampfeinlasskanal 39 ist jeweils mit einem Einlassventil 24, 25 und der Dampfauslasskanal 40 jeweils mit einem Dampfauslassventil 28, 29 verbunden. Der Dampfeinlasskanal 39 und der Dampfauslassauskanal 40 weisen mehrere über ihre Längserstreckung verteilt angeordnete Düsen 41 auf, mit welchen Dampf den jeweiligen Dampfkammern 36, 37 verteilt zu- bzw. abgeführt werden kann.

In den Dampfleitungen 15, 16 sind Gasflussmessgeräte 48, 49 zum Messen des Dampfflusses angeordnet. Geeignete Gasflussmessgeräte sind vor allem Messgeräte mit Messblenden (Englisch: Restriction Plate Flowmeter). Der Dampffluss wird als Massestrom Q in kg pro Stunde (kg/hour) gemessen. Die in den Dampfleitungen 15, 16 gemessenen Masseströme werden anhand der in den Dampfkammern 36, 37 gemessenen Temperatur und des darin gemessenen Druckes korrigiert, sodass der tatsächlich in den Formraum 14 eingebrachte Dampffluss ermittelt wird.

Alternativ kann der Dampffluss indirekt aus den Dampfdrücken und der Ventilöffnungsstellung abgeschätzt werden.

An einer der beiden Formhälften 13 ist der Füllinjektor 10 angeordnet. Der Füllinjektor erstreckt sich von der Formraumwandung 34 durch die Dampfkammer 37 hindurch in den Bereich außerhalb der Dampfkammer 37. Der Füllinjektor 10 besitzt ein rohrförmiges Gehäuse 42, in dem ein Düsenrohr 43 zur Ausbildung einer Ventildüse angeordnet ist. Das Düsenrohr 43 mündet mit einer Öffnung an der Formraumwandung 34. Im Düsenrohr 43 ist eine Pinole 44 längs verschieblich anordbar, welche an ihrem zur Formraumwandung 34 weisenden Ende einen Verschlusszapfen 45 zum Verschließen der im Bereich der Formraumwandung 34 angeordneten Öffnung des Düsenrohrs 43 und an dem von der Formraumwandung 34 entfernten Ende einen Pneumatikkolben 46 aufweist. Der Pneumatikkolben 46 befindet sich in einem Pneumatikzylinder und ist derart betätigbar, dass die Pinole zwischen einer Verschlussstellung, in der sich der Verschlusszapfen 45 in der Öffnung des Düsenrohrs 43 befindet und einer Öffnungsstellung, in welcher die Pinole 44 ein Stück in das Düsenrohr 43 eingezogen ist, so dass das Düsenrohr 43 offen ist. Der Füllinjektor 10 weist eine Öffnung 47 auf, an welcher die Förderleitung 4 mündet. In der Öffnungsstellung der Pinole besteht somit ein freier Durchgang von der Förderleitung 4 durch das Düsenrohr 43 und durch die Formraumwandung 34 hindurch.

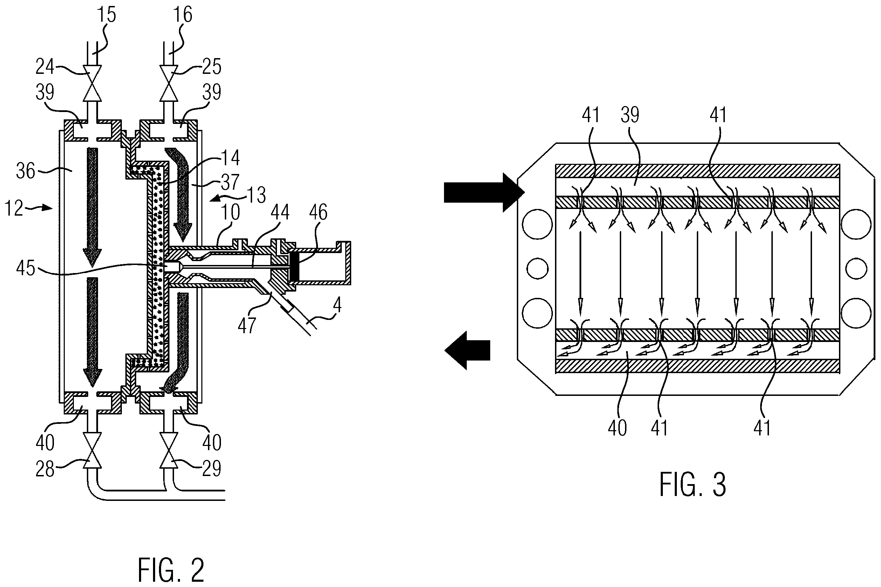

Wie es oben bereits ausgeführt ist, begrenzen die beiden Formhälften 12, 13 im zusammengefahrenen Zustand den Formraum 14 (Fig. 2). Hierbei liegen die Formraumwandungen 33, 34 in ihrem Umfangsbereich derart dicht aneinander an, dass keine Schaumstoffpartikel aus dem Formraum 14 austreten können. Zudem liegen die Formraumwandungen 33, 34 im Umfangsbereich im Wesentlichen gasdicht aneinander an, so dass weder Dampf noch Luft im Umfangsbereich des Formraums 14 in nennenswerter Menge austreten kann.

Die Formhälften 12, 13 können derart weitergebildet sein, dass zumindest eine der Formhälften 12, 13 am Umfangsbereich ein Dichtelement (nicht dargestellt) aufweist, sodass die beiden Formhälften 12, 13 bereits im Umfangsbereich miteinander abgedichtet sind, wenn sie in einem vorbestimmten Abstand zueinander angeordnet sind. Dieser Abstand wird als Crackspalt bezeichnet. Dieses Dichtelement ist beispielsweise entweder ein federbeaufschlagter, metallischer Dichtring oder eine Gummilippe. Die Dichteinrichtung ist derart ausgebildet, dass die beiden Formhälften 12, 13 vollständig zusammenfahrbar sind, bis die Formraumwandungen 33, 34 sich im Umfangsbereich berühren und im geöffneten Zustand (= Crackspalt) eine umlaufende Abdichtung vorliegt.

Mit derartigen Formhälften 12, 13 ist es möglich, den Crackspalt einzustellen und in dieser Anordnung den Formraum mit Schaumstoffpartikeln zu füllen und mit Wasserdampf zu bedampfen, ohne dass am Umfangsbereich Wasserdampf in nennenswerter Menge austritt.

Im Folgenden wird ein Verfahren zum Herstellen von Partikelschaumstoffteilen mit der oben beschriebenen Vorrichtung erläutert:
Das Verfahren umfasst die folgenden grundsätzlichen Schritte:

- Füllen des Formraums 14
- Spülen der Dampfkammern 36, 37 mit Dampf
- Querbedampfung, vorzugsweise mit einer ersten und einer zweiten Querbedampfung
- Autoklavieren
- Nachbedampfung (optional)
- Kühlen
- Stabilisieren (optional)
- Entformen
- Reinigen des Werkzeuges (optional)
- Reinigen der Pinole (optional)

Zum Befüllen des Formraums 14 wird über die Druckluftleitung 6 im Bereich des Bodens 5 des Materialbehälters 2 Luft eingeblasen, um die darin befindlichen Schaumstoffpartikel zu verwirbeln und zu vereinzeln. Gleichzeitig wird der Treibdüse auch Treibluft zugeführt, sodass aus dem Materialbehälter 2 Schaumstoffpartikel in die Förderleitung 4 gesaugt und mit der Treibluft in Richtung zum Formwerkzeug 3 transportiert werden. Während des Befüllens sind die Auslassventile 28, 29 geöffnet, so dass aus dem Formraum 14 Luft entweichen kann. Der Formraum 14 selbst ist geschlossen, wobei die Formteile 12, 13 vollständig zusammengefahren sein oder mit einem Crackspalt voneinander beabstandet sein können.

Der Schieber 23 kann aufeinanderfolgend geöffnet und geschlossen werden. Die Öffnungs- und die Verschlusszeiten liegen typischerweise im Bereich von 500 ms bis 1 s. Durch dieses zyklische Öffnen und Schließen des Schiebers 23 werden die Schaumstoffpartikel aus dem Materialbehälter 2 intermittierend der Förderleitung 4 zugeführt. Hierdurch kann eine Brückenbildung der Schaumstoffpartikel im Materialbehälter 2 aufgebrochen werden und die Schaumstoffpartikel werden vereinzelt. Dies ist insbesondere zweckmäßig bei Schaumstoffpartikeln mit einer adhäsiven Oberfläche, wie z. B. eTPU-Schaumstoffpartikel.

Ein intermittierendes Ansaugen kann auch alternativ durch ein intermittierendes Zuführen der Treibluft aus der Luftdruckluftleitung 9 an der unmittelbar benachbart zum Materialbehälter 2 angeordneten Treibdüse 8 erfolgen.

Über die Dampfleitung 18 wird vom Dampfgenerator 17 dem Materialbehälter 2 Wasserdampf zugeführt. Der Wasserdampf ist trockener Sattdampf, der mit dem im Materialbehälter befindlichen Druck (ca. 1 bar) dem Materialbehälter 2 zugeführt wird. Vorzugsweise wird der Wasserdampf im Materialbehälter 2 benachbart zur Anschlussstelle der Förderleitung 4 im Materialbehälter 2 eingedüst, so dass die in die Förderleitung 4 gesaugten Schaumstoffpartikel vom Wasserdampf benetzt sind. Eine weitere Zufuhr von Wasserdampf zu dem Strom von Schaumstoffpartikeln erfolgt an der Treibdüse 8, an der Anschlussstelle 22 und am Füllinjektor 10.

Die Temperatur des trockenen Sattdampfes ist durch die Siedepunktkurve von Wasserdampf festgelegt und somit durch den vorliegenden Druck vorgegeben. Bei einem Druck von etwa 1 bar in der Förderleitung 4 beträgt die Temperatur des Sattdampfes etwa 100°C.

Die Menge des Wasserdampfes ist so bemessen, dass die Schaumstoffpartikel an ihren Oberflächen nicht aktiviert werden und nicht in der Förderleitung miteinander verschweißen. Bei Schaumstoffpartikeln auf Basis von Polyurethan liegt die Temperatur zum Verschweißen derselben bei etwa 80°C bis 130°C, wobei dies von der jeweils verwendeten Materialzusammensetzung abhängt. Die Menge des Wasserdampfes sollte dann derart bemessen sein, dass die Schaumstoffpartikel nicht entlang des Transportweges vom Materialbehälter 2 zum Formwerkezeug 3 eine Temperatur von 90°C oder mehr erreichen. Vorzugsweise wird der Wasserdampf an mehreren Stellen entlang des Transportweges zugeführt. Die Beförderung von Schaumstoffpartikeln unter Zugabe von Wasserdampf ist in der WO 2014/128214 A1 näher beschrieben, weshalb auf dieses Dokument verwiesen wird.

Nicht-adhäsive Schaumstoffpartikel, wie z. B. Schaumstoffpartikel aus expandiertem Polypropylen, expandiertem Polyethylen oder expandiertem Polystyrol, können auch ohne Zufuhr von Wasserdampf in der Förderleitung zuverlässig befördert werden.

In einer Vorrichtung 1 können gleichzeitig mehrere Formwerkzeuge 3 vorgesehen werden. Wenn der Staudruck in den jeweiligen Füllinjektor 10 beim Füllen zu hoch wird, dass der Luftstrom der Fülluft anstatt ins Werkzeug in die Förderleitung 4 in Richtung zum Materialbehälter 2 strömt, dann stoppt der Füllstrom automatisch. Dies geschieht, wenn der Formraum 14 des jeweiligen Formwerkzeuges 3 vollständig gefüllt ist und die ersten Schaumstoffpartikel im Bereich der zum Formraum 14 weisenden Öffnung des Füllinjektors 10 angeordnet sind.

Die zum Materialbehälter 2 strömende Luft befördert die Schaumstoffpartikel zurück in den Materialbehälter 2, was auch als Rückblasen des Füllinjektors 10 in der Förderleitung 4 bezeichnet wird.

Mittels eines Drucksensors im Füllinjektor 10 und/oder in der Förderleitung 4 kann die durch die Füllung des Formraumes 14 mit Schaumstoffpartikeln und die in den Füllinjektor 10 gestauten Schaumstoffpartikel erzeugte Druckerhöhung der Förderluft detektiert werden. Diese Detektion kann für ein jedes Formwerkzeug 3 separat ausgeführt oder mittels eines Drucksensors für alle Formwerkzeuge 3 gemeinsam ausgeführt werden, wobei dieser Drucksensor in einem gemeinsamen Abschnitt der Förderleitung 4 ein Stück beabstandet von den Formwerkzeugen 3 bzw. Füllinjektoren 10 angeordnet ist. Nachdem die vollständige Füllung eines jeden der Formwerkzeuge 3 detektiert worden ist, wird das Rückblasen in einer vorbestimmten Zeitdauer ausgeführt, damit die Förderleitung 4 vollständig von Schaumstoffpartikeln freigeblasen ist.

Werden die Schaumstoffpartikel unter Zugabe vom Wasserdampf befördert, dann kondensiert ein Teil des Wasserdampfes in der Förderleitung 4. Das kondensierte Wasser wird beim Rückblasen in den Materialbehälter 2 gefördert und benetzt dort die darin befindlichen Schaumstoffpartikel, was das Fließverhalten bei den späteren Füllvorgängen verbessert.

Sobald festgestellt wird, dass die Formräume 14 mit Schaumstoffpartikel gefüllt sind, werden die Füllinjektoren 10 geschlossen, indem die Pinole 44 mit ihrem Verschlusszapfen 45 in die Öffnung des Düsenrohrs 43 verfahren wird. Wird die vollständige Füllung der einzelnen Formwerkzeuge unabhängig voneinander detektiert, dann werden die entsprechenden Füllinjektoren 10 geschlossen, wenn der jeweilige Formraum 14 gefüllt ist. Erfolgt die Detektion der Füllung der Formwerkzeuge gemeinsam, dann werden die Füllinjektoren 10 erst geschlossen, wenn alle Formräume 14 aller Formwerkzeuge gefüllt sind. Zum Rückblasen der Schaumstoffpartikel wird der an den Füllinjektoren 10 zugeführte Luftdruck auf den maximal möglichen Druck erhöht. Vorzugsweise wird hierbei auch Fluidisierluft eingeschaltet.

Sind die Schaumstoffpartikel aus der Förderleitung 4 zurück in den Materialbehälter 2 gefördert worden, dann kann der Materialbehälter 2 neu aufgefüllt und erneut unter Druck gesetzt werden.

Durch die oben erläuterte Detektion des Luftdruckes in der Förderleitung 4 oder des Druckes der am Injektor 10 zugeführten Füllluft kann die vollständige Füllung des jeweiligen Formraumes detektiert und das Füllen des Formraums beendet werden. Durch das Detektieren des Füllzustandes werden zum einen Fehlfüllungen vermieden und zum anderen wird die Zykluszeit gegenüber herkömmlichen Verfahren verringert, bei welchen für das Füllen eine vorbestimmte Zeitdauer angesetzt wird. Diese Zeitdauer wurde bisher empirisch erfasst. Insbesondere das Detektieren des Füllzustandes der einzelnen Formräume anhand des Füllluftdruckes oder anhand des Luftdruckes in der bereits verzweigten Förderleitung 4 erlaubt eine individuelle Überwachung des Füllzustandes der einzelnen Formräume. Dies ist insbesondere dann zweckmäßig, wenn gleichzeitig Formräume mit unterschiedlichen Volumen verwendet werden, die entsprechend unterschiedlich lange zu füllen sind. Wenn die vollständige Füllung eines Formraumes erkannt wird, damit vorzugsweise zunächst die Zufuhr der Füllluft am entsprechenden Injektor 10 eingestellt oder erst wenn alle Formräume geschlossen sind, wird wieder Füllluft am Injektor 10 zum Rückblasen der in der Förderleitung befindlichen Schaumstoffpartikel eingeschaltet. Hierdurch wird vermieden, dass aus bereits zu gefüllten Formräumen führenden Zweigen der Förderleitung 4 rückgeblasen wird, während gleichzeitig noch andere Formräume zu füllen sind. Eine solche individuelle Überwachung des Füllzustandes der einzelnen Formräume erlaubt die Verwendung von Formräumen mit stark unterschiedlichen Volumen.

Da das gesamte System Druckschwankungen unterliegt, ist es zweckmäßig die Messwerte zu glätten. Die Messwerte der einzelnen Sensoren können hierzu digitalisiert werden und z. B. mittels einer Integral-Stufe geglättet werden.

Die Menge der den jeweiligen Formräumen zugeführten Schaumstoffpartikel hängt vor allem von den eingestellten Drücken ab. Hierbei wird zwischen dem Materialbehälterdruck, dem Fluidisierluftdruck, dem Förderleitungsdruck und dem Füllluftdruck unterschieden. Der Materialbehälterdruck ist der Druck, der im Materialbehälter 2 vorliegt. Hierbei kann als Materialbehälterdruck auch derjenige Druck erfasst werden, der zu Beginn des Füllvorganges im Materialbehälter 2 vorliegt.

Der Fluidisierluftdruck ist derjenige Druck mit welchem Fluidisierluft in einem Einlaufbereich der ein oder mehrere Öffnungen des Materialbehälters 2 zugeführt werden, um eine Brückenbildung der Schaumstoffpartikel aufzuheben.

Der Förderleitungsdruck ist der Druck innerhalb der Förderleitung im Bereich zwischen dem Materialbehälter 2 und dem Füllinjektor 10. Da der Förderleitung an mehreren Stellen Druckluft (Treibdüse 8) und Wasserdampf (Anschlussstelle 22) entlang der Leitung 4 zugeführt werden und zudem der Dampf in der Leitung 4 kondensieren kann, können entlang der Förderleitung unterschiedliche Förderleitungsdrücke vorliegen. Die Förderleitungsdrücke können sich auch auf Grund der Geometrie der Förderleitung 4 und den hierdurch verursachten Druckabfällen unterscheiden. Es kann daher zweckmäßig sein, mehrere "Förderleitungsdrücke" zu berücksichtigen.

Der Fülluftdruck ist der Druck der am jeweiligen Injektor 10 zugeführten Füllluft. Dieser Füllluftdruck wird mit einem Drucksensor im Injektor 10 gemessen.

Weiterhin kann ein Gegendruck angelegt werden, indem die Dampfauslassventile 28, 29 der Dampfkammer nur teilweise geöffnet werden, sodass sich in den jeweiligen Dampfkammern 36, 37 ein Staudruck bildet, der über die Dampfdüsen 35 auf den Formraum 14 wirkt. Der Gegendruck wird über jeweils einen Sensor in der Dampfkammer 36, 37 gemessen. Die Dampfauslassventile 28, 29 werden mittels einer Regeleinrichtung derart geregelt, dass sie einen vorbestimmten Gegendruck in den Dampfkammern 36, 37 erzeugen. Durch das Vorsehen eines Gegendruckes wird der Druck in der Förderleitung 4 und im Formraum 14 hochgehalten, wodurch die Schaumstoffpartikel auf einem kleinen Volumen gehalten werden. Hierdurch können in einem Formraum 14 mehr Schaumstoffpartikel zugeführt werden, als dies ohne Anlegen eines Gegendrucks möglich ist. Nach dem Zurücknehmen des Gegendruckes expandieren die Schaumstoffpartikel im Formraum 14.

Ein weiterer Parameter zur Einstellung der Füllmenge ist der Crackspalt, d. h. der Spalt, mit welchem die beiden Formhälften 12, 13 während des Füllens voneinander beabstandet angeordnet sind. Die Verwendung eines Crackspaltes beim Füllen erhöht vor allem die Dichte in den dünnen Bereichen des herzustellenden Partikelschaumstoffteils.

Vorzugsweise wird das Gewicht der einzelnen hergestellten Partikelschaumstoffteile gemessen und anhand des gemessenen Gewichtes die Füllmenge automatisch eingestellt. Die Einstellung der Füllmenge kann durch Einstellen des Crackspaltes erfolgen.

Weiterhin kann die Oberfläche der hergestellten Partikelschaumstoffteile mit einer Kamera optisch erfasst werden, wodurch Fehlstellen an der Oberfläche detektierbar sind. Diese Fehlstellen werden durch eine ungleichmäßige Füllung des Formraums verursacht.

Die Füllmenge kann durch Erhöhen des Materialbehälterdrucks erhöht werden. Falls ein Gegendruck verwendet wird, kann die Füllmenge durch Erhöhen des Gegendruckes ebenfalls erhöht werden. Weiterhin kann die Füllmenge durch Aufweiten des Crackspaltes erhöht werden, falls ein Crackspalt verwendet wird.

Die Erhöhung des Füllluftdruckes kann die Füllmenge etwas erhöhen, wobei hier der Effekt wesentlich geringer als bei der Erhöhung des Materialbehälterdruckes bzw. Gegendruckes ist. In Abhängigkeit des gemessenen Gewichtes der Partikelschaumstoffteile kann somit einer oder mehrere dieser Parameter entsprechend verändert werden.

Die Gleichmäßigkeit der Füllung des Formraumes 14 hängt vor allem vom Füllluftdruck ab. Je nach der Ausbildung des Formraums 14 kann ein geringer Füllluftdruck oder ein hoher Füllluftdruck zweckmäßig sein, wobei bei einem geringen Füllluftdruck die Strömungsgeschwindigkeit der einströmenden Schaumstoffpartikel geringer als bei einem hohen Füllluftdruck ist. Die Gleichmäßigkeit der Füllung wird auch durch den Förderleitungsdruck bzw. den Förderleitungsdrücken, dem Fluidisierluftdruck und dem Materialbehälterdruck beeinflusst. Falls die Schaumstoffpartikel unter Zugabe von Wasserdampf zugeführt werden, dann hat der Druck, mit welcher der Wasserdampf der Förderleitung zugeführt wird, auch Einfluss auf die Gleichmäßigkeit der Füllung des Formraumes 14.

Zwischen der Füllmenge und den Parametern Materialbehälterdruck, Gegendruck und Crackspalt bestehen proportionale Zusammenhänge, welche mit herkömmlichen Regeln (P-Regler, PI-Regler, PID-Regler) geregelt werden können. Bei Berücksichtigung der mittels der Kamera festgestellten Textur der Oberfläche der Partikelschaumstoffteile sind die Zusammenhänge wesentlich komplexer, da auch hier die Geometrie des Formraumes einen Einfluss hat. Als Regeleinrichtung kann hierzu ein neuronales Netzwerk verwendet werden, dessen Eingangsparameter zumindest einer der gemessenen Drücke, vorzugsweise mehrere dieser Drücke und insbesondere alle der gemessenen Drücke, das von der Kamera erfasste Bild bzw. vom Bild abgeleitete Parameter und/oder die Form des Formraums 14 bzw. bestimmte Charakteristika des Formraumes sind.

Die aus dem Bild abgeleiteten Parameter können z. B. die Anzahl von dunklen Punkten (= Fehlstellen) sein, wobei die Punkte insbesondere eine Mindestgröße aufweisen sollen, die Größe der dunklen Flächen oder andere Größen, die die Regelmäßigkeit der Oberfläche der Textur beschreiben, sein.

Die Charakteristika des Formraumes können die Gleichmäßigkeit des Strömungsweges vom Füllinjektor zu den vom Füllinjektor entfernten Punkten im Formraum sein. Dies sind beispielsweise statistische Größen, wie die Standardabweichung des Strömungsquerschnittes vom Füllinjektor 10 bis zu den jeweils entfernten Punkten des Formraumes. Dies kann auch der maximale und der minimale Querschnitt des Formraumes sein, der von den Schaumstoffpartikeln durchzuströmen ist. Weitere Charakteristika sind der Abstand der Engstellen zum Füllinjektor im Strömungsweg im Formraum. Die automatische Regelung der Drücke und/oder des Crackspaltes bezüglich der Gleichmäßigkeit der Befüllung des Formraumes ist ein vieldimensionales Problem. Hier ist die Verwendung einer selbstlernenden Einrichtung, wie z. B. eines neuronalen Netzwerkes, zweckmäßig, das in einer Lernphase angelernt wird. An der Eingangsseite des neuronalen Netzwerkes werden einer oder mehrere der folgenden Parameter angelegt:

Materialbehälterdruck, Fluidisierluftdruck, Förderleitungsdruck(e), Füllluftdruck(e), Crackspalt, Abbildung der Oberfläche eines hergestellten Partikelschaumstoffteiles oder hieraus abgeleitete Größen, charakteristische Größen des Formraumes.

Während einer Lernphase des neuronalen Netzwerkes werden die mit unterschiedlichen Parametern hergestellten Partikelschaumstoffteile manuell bezüglich ihrer Qualität beurteilt und diese Beurteilung wird dem neuronalen Netzwerk zugeführt. Die Beurteilung erfolgt vorzugsweise in mehreren Qualitätsstufen, die zumindest zwei Qualitätsstufen umfassen, nämlich Ausschuss und korrektes Partikelschaumstoffteil, jedoch auch mehrere Qualitätsstufen umfassen können.

Eine einmal derart angelernte Regeleinrichtung kann dann selbstständig die Parameter einstellen, um eine gleichmäßige Füllung des Formraumes zu erhalten. Mit einer solchen selbstlernenden Regelung ist es auch möglich gleichzeitig neben der Gleichmäßigkeit der Füllung auch die Füllmenge einzustellen. Hierzu wird als Eingangswert für das neuronale Netzwerk auch das Gewicht des Formteils angelegt und während der Lernphase das Sollgewicht eingegeben.

Nach dem Füllen des Formraumes werden die Dampfkammern 36, 37 mit Dampf gespült. Beim Spülen der Dampfkammern 36, 37 wird die darin befindliche Luft durch Dampf verdrängt. Beide Dampfeinlassventile 24, 25 und Dampfauslassventile 28, 29 der beiden Dampfkammern 36, 37 sind geöffnet. Der Dampf strömt gleichmäßig durch die Dampfkammern 36, 37.

Bei unterschiedlichen Kammervolumen können unterschiedliche Drücke zweckmäßig sein, um eine gleichmäßige Dampfdurchströmung und Werkzeugaufwärmung zu erhalten.

Beim Spülen der Dampfkammern gibt es folgende Erstellparameter:
Zeitdauer der Spülung, Druck des Dampfes am Dampfeinlassventil 24, 25, Temperatur des Dampfes am Dampfeinlassventil 24, 25.

Es gibt folgende Messparameter:
Druck des Dampfes am Dampfauslassventil 28, 29, Temperatur des Dampfes am Dampfauslassventil 28, 29, Temperatur des Kondensats am Dampfauslassventil 28, 29.

Das Spülen kann mit einer vorbestimmten Zeitdauer ausgeführt werden. Vorzugsweise werden die Dampfkammern so lange gespült, bis die Temperatur des Dampfes am Auslassventil einen vorbestimmten Wert erreicht hat. Das Spülen in den beiden Dampfkammern 36, 37 wird vorzugsweise unabhängig voneinander geregelt. Dies gilt insbesondere wenn die Dampfkammern 36, 37 ein unterschiedliches Volumen aufweisen.

Ist die Luft vollständig aus den Dampfkammern 36, 37 verdrängt und sind die Formhälften 12, 13 ausreichend vorgewärmt, dann wird eine Querbedampfung ausgeführt. Bei der Querbedampfung ist der Dampfeinlasskanal 24, 25 einer der beiden Dampfkammern 36, 37 geöffnet und der andere Dampfeinlasskanal 39, 40 geschlossen und der Dampfauslasskanal 28, 29 der Dampfkammern 36, 37, dessen Dampfeinlasskanal 39, 40 geöffnet ist, ist geschlossen und der andere Dampfauslasskanal 28, 29 ist geöffnet. Hierdurch strömt Dampf von einer der Dampfkammer 36, 37 durch die Dampfdüsen 35 in den Formraum 14 und vom Formraum 14 durch die Düsen 41 in die andere Dampfkammer 36, 37. Wenn eine erste und eine zweite Querbedampfung ausgeführt werden, dann wird der Dampf in der ersten Querbedampfung in eine bestimmte Richtung von einer der beiden Dampfkammern zur anderen Dampfkammer und während der zweiten Querbedampfung in entgegengesetzte Richtung durch den Formraum 14 geführt.

Zum Steuern bzw. Regeln der Querbedampfung sind ein Temperatursensor am Formwerkzeug 3 und insbesondere jeweils ein Temperatursensor an einer der Formhälften 12, 13, ein Drucksensor jeweils an den Dampfeinlassventilen 24, 25 und an den Dampfauslassventilen 28, 29, ein Drucksensor im Formraum 14 zum Messen eines Schaumdruckes und Sensoren zur Detektion der Öffnungsstellung der Dampfeinlassventile 24, 25 und der Dampfauslassventile 28, 29 vorgesehen. Anstelle des Sensors zur Messung der Ventilstellung kann auch ein entsprechender Stellwert verwendet werden, mit dem das entsprechende Ventil eingestellt wird. Der Schaumdruck ist der Druck im Formraum 14. Der Schaumdruck wird in manchen Betriebszuständen fast ausschließlich durch die expandierten Schaumstoffpartikel und in anderen Betriebszuständen durch den darin befindlichen Wasserdampf oder durch beides ausgeübt.

Die Querbedampfung kann mittels der Stellparameter Werkzeugtemperatur, Dampfdruck am Dampfeinlassventil bzw. Dampfauslassventil, Dampffluss und Gegendruck (optional) gesteuert bzw. geregelt werden. Hierbei gilt grundsätzlich, dass mit dem Dampfdruck die Temperatur gesteuert werden kann. Bei Verwendung eines Gegendruckes wird im Formraum insgesamt der Druck erhöht, wodurch die Schaumstoffpartikel zusammengedrückt werden. Dies führt zu einer Vergrößerung der Zwickel und einer Steigerung des Dampfflusses.

Bei herkömmlichen Vorrichtungen wird die Querbedampfung druckgesteuert. Sie kann auch staudruckgesteuert ausgeführt werden, wobei das Dampfauslassventil, an dem der Dampf austritt, auf einen bestimmten Druck geregelt wird. Bei herkömmlichen Vorrichtungen wird die Querbedampfung eine vorbestimmte Zeit ausgeführt, wobei die Querbedampfungszeit entweder ab Beginn der Öffnung der Ventile oder prozessabhängig bis zum Erreichen eines bestimmten Schaumdruckes im Formraum 14 ausgeführt wird. Ein zu hoher Schaumdruck im Werkzeug bedeutet, dass das Partikelschaumstoffteil beim Abkühlen kollabiert bzw. an der Oberfläche verbrennt. Ein Kollabieren führt zu einer kleinen Größe des Partikelschaumstoffteils. Ein zu geringer Schaumdruck kann einerseits dadurch verursacht werden, dass der Formraum nicht ausreichend mit Schaumstoffpartikeln gefüllt ist oder andererseits dadurch, dass die Bedampfung zu kurz ausgeführt wird, wodurch die einzelnen Schaumstoffpartikel nicht korrekt miteinander verschweißt werden und nicht ausreichend expandieren. Die Ursache für den zu geringen Schaumdruck kann durch eine Messung des Gewichtes des Partikelschaumstoffteils und durch eine Messung der Festigkeit des Partikelschaumstoffteils festgestellt werden.

Gemäß einem Aspekt der vorliegenden Erfindung wird der Schaumsolldruck durch Messen der Größe und/oder des Gewichts und/oder der Festigkeit des Partikelschaumstoffteils automatisch justiert. In Kombination oder alternativ zur Messung der Größe kann auch ein mit der Kamera erfasstes Bild der Oberfläche des Partikelschaumstoffteils eingehend analysiert werden, ob das Partikelschaumstoffteil verbrannt ist und entsprechende dunkle Stellen aufweist. In Abhängigkeit von diesen Messungen wird der Schaumsolldruck so eingestellt, dass das Partikelschaumstoffteil die korrekte Größe und Beschaffenheit aufweist.

Die Dauer der Querbedampfung kann durch Messen eines Dampfflusswiderstandes des Materials im Formraum 14 bestimmt werden. Beim Erreichen eines bestimmten Dampfflusswiderstandes wird von der ersten auf die zweite Querbedampfung umgeschaltet bzw. beim Erreichen eines weiteren Dampfflusswiderstandes die zweite Querbedampfung beendet. Der Dampfflusswiderstand wird aus dem Dampffluss bestimmt, der die gemessene Dampfmenge pro Zeiteinheit ist. Die Messung der Dampfmenge ist relativ grob, da ein Teil des Dampfes kondensiert und dadurch das Messergebnis verändert. Man kann dies kompensieren, indem man die Menge des am Dampfauslassventil 28, 29 austretenden Kondensats misst. Weiterhin wird der Dampfflusswiderstand erheblich durch die Düsen 41 in den Formraumwandungen 33, 34 beeinflusst, wodurch der durch das Partikelschaumstoffteil verursachte Anteil des Dampfflusswiderstandes nur mit einer relativ großen Unschärfe erfasst werden kann. Für die Prozesssteuerung sind jedoch keine absoluten Werte des Dampfflusswiderstandes notwendig, sondern es genügen relative Werte, die die Änderung des Dampfflusswiderstandes während des Prozesses anzeigen.

Alternativ kann gemäß einem Aspekt der vorliegenden Erfindung der Dampfflusswiderstand mehrfach bestimmt werden, wobei zumindest drei Messungen des Dampfflusswiderstandes erfolgen sollten. Bevorzugt werden mehr als drei Messungen des Dampfflusswiderstandes durchgeführt. Anhand der gemessenen Dampfflusswiderstandswerte und der jeweiligen Zeitpunkte, an welchen die Dampfflusswiderstandswerte gemessen worden sind, wird die exponentielle Änderung des Dampfflusswiderstandes bestimmt. Aus diesem exponentiellen Verlauf kann die Zeitkonstante $\tau$ abgeleitet werden. Somit kann die Querbedampfung nach Ablauf einer Zeitdauer beendet werden, die der dreifachen Zeitkonstante $\tau$ entspricht. Dies bedeutet, dass der Soll-Dampfflusswiderstand des Querbedampfens zu mehr als 95 % erreicht worden ist, ohne dass ein expliziter Soll- Dampfflusswiderstand vorgegeben werden muss.

Gemäß einer weiteren Alternative kann der Schaumdruck mehrfach abgetastet werden, wobei zumindest drei Messungen des Schaumdruckes erfolgen sollten. Bevorzugt werden mehr als drei Messungen des Schaumdruckes durchgeführt. Anhand der gemessenen Schaumdruckwerte und der jeweiligen Zeitpunkte, an welchen die Schaumdruckwerte gemessen worden sind, wird die exponentielle Änderung des Schaumdruckes bestimmt. Aus diesem exponentiellen Verlauf kann die Zeitkonstante $\tau$ abgeleitet werden. Im vorliegenden Ausführungsbeispiel wird das Autoklavieren nach Ablauf einer Zeitdauer beendet, die der dreifachen Zeitkonstante $\tau$ entspricht. Dies bedeutet, dass der Soll-Schaumdruck des Querbedampfens zu mehr als 95 % erreicht worden ist, ohne dass ein expliziter Soll-Schaumdruck vorgegeben werden muss.

Nach dem Querbedampfen erfolgt das Autoklavieren. Hierbei sind beide Dampfauslassventile 28, 29 geschlossen. Beide Dampfeinlassventile 24, 25 sind geregelt geöffnet, so dass sich ein vorbestimmter Druck in den Dampfkammern 36, 37 einstellt. Die Drücke der beiden Dampfkammern 36, 37 können auch auf unterschiedliche Werte eingestellt werden. Dies hat Einfluss auf die Verschweißung, die Oberfläche und das Bezugsverhalten der Partikelschaumstoffteile.

Während des Autoklavierens wird der Schaumdruck im Formraum 14 mittels eines Drucksensors und die Werkzeugtemperatur mittels eines Temperatursensors gemessen.

Mit dem Autoklavieren soll das Partikelschaumstoffteil fast vollständig verschweißt werden. Hierbei nimmt die Erhöhung des Schaumdruckes exponentiell ab, d. h., dass der Schaumdruck zunächst stark ansteigt und sich dann mit geringer Rate einem Soll-Schaumdruck nähert. Die Änderungen des Schaumdruckes unterliegen somit einem exponentiellen Verlauf.

Gemäß einem Aspekt der vorliegenden Erfindung wird der Schaumdruck mehrfach abgetastet, wobei zumindest drei Messungen des Schaumdruckes erfolgen sollten. Bevorzugt werden mehr als drei Messungen des Schaumdruckes durchgeführt. Anhand der gemessenen Schaumdruckwerte und der jeweiligen Zeitpunkte, an welchen die Schaumdruckwerte gemessen worden sind, wird die exponentielle Änderung des Schaumdruckes bestimmt. Aus diesem exponentiellen Verlauf kann die Zeitkonstante $\tau$ abgeleitet werden. Im vorliegenden Ausführungsbeispiel wird das Autoklavieren nach Ablauf einer Zeitdauer beendet, die der dreifachen Zeitkonstante $\tau$ entspricht. Dies bedeutet, dass der Soll-Schaumdruck des Autoklavierens zu mehr als 95 % erreicht worden ist, ohne dass ein expliziter Soll-Schaumdruck vorgegeben werden muss.

Figur 5 zeigt drei exponentiell abfallende Kurven I, II und III. Die Kurve I weist eine Zeitkonstante $\tau$ von 1 s, die Kurve II eine Zeitkonstante $\tau$ von 2 s und die Kurve III eine Zeitkonstante $\tau$ von 3 s auf. Auf der Abszisse ist die Zeit in Sekunden aufgetragen und die Ordinate zeigt eine an sich beliebige Messgröße. Alle drei Kurven beginnen zum Zeitpunkt 0 beim Wert 1. Nach 3τ beträgt der Wert jeweils 0,05, d.h., dass er um 95% reduziert ist bzw. nur noch 5% vom Endzustand entfernt ist, der hier 0 ist.

Die Zeitdauer des Autoklavierens kann auch innerhalb eines Zeitbereichs des 2- bis 4-fachen der Zeitkonstante τ insbesondere des 2,5- bis 3,5-fachen der Zeitkonstante τ liegen.

Mit diesem Verfahren kann ein bestimmter Verfahrensschritt mit einer optimalen Zeitdauer durchgeführt werden, wobei ein bestimmter Soll-Wert bzw. Endzustand einer für den Verfahrensschritt charakteristischen Größe fast erreicht wird, ohne dass der Soll-Wert explizit vorgegeben sein muss. Das Verfahren kann somit einfach an unterschiedliche Gegebenheiten (unterschiedliche Materialien, unterschiedliche Einstellungen der Drücke und Temperaturen) angepasst werden. Zudem wird der Verfahrensschritt nur so lange wie nötig ausgeführt, wodurch das Verfahren sehr effizient durchgeführt wird. In dem vorliegenden Ausführungsbeispiel ist der Schaumdruck die charakteristische Größe. Diese Methode, bei der die Zeitdauer, innerhalb der ein Schritt oder ein Teilschritt eines bestimmten Verfahrens durchzuführen ist, einem vorbestimmten Vielfachen von τ entspricht, lässt sich auch auf andere Schritte oder Teilschritte anwenden, die eine charakteristische Größe mit einem exponentiellen Verlauf aufweisen, wobei die charakteristische Größe sich einem Soll-Wert annähert.

Nach dem Autoklavieren kann eine Nachbedampfung ausgeführt werden. Bei der Nachbedampfung sind alle Dampfeinlass- und Dampfauslassventile 24, 25, 28, 29 geschlossen. Eine Nachbedampfung dient zur Vergleichmäßigung der Verschwei-βung und zur Homogenisierung der im Schaum befindlichen Temperaturen und Drücke. Die Nachbedampfung wird vor allem bei größeren Partikelschaumstoffteilen ausgeführt. Bei kleinen Partikelschaumstoffteilen, wie z. B. Schuhsohlen, ist sie in der Regel nicht notwendig. Bei größeren Partikelschaumstoffteilen, wie z. B. Dämmplatten, ist eine Nachbedampfung jedoch sehr zweckmäßig.

Die Nachbedampfung wird beendet, wenn der Schaumdruck auf einen bestimmten Soll-Wert abgefallen ist. Da der Schaumdruck auch hier wiederum einem exponentiellen Verlauf folgt, kann die Dauer der Nachbedampfung mit der beim Autoklavieren beschriebenen Methode eingestellt werden. Weiterhin ist es möglich, die zeitliche Ableitung des Schaumdruckes zu bestimmen und, wenn die Änderung des Schaumdruckes unter einem vorgeschriebenen Wert fällt, die Nachbedampfung zu beenden.

Nach den Autoklavieren oder dem Nachbedampfen erfolgt das Kühlen des Partikelschaumstoffteils im Formwerkzeug 3. Das Formwerkzeug 3 ist hierbei geschlossen. Die Dampfauslassventile 28, 29 werden geöffnet, um den noch vorhandenen Überdruck abzubauen. Nachdem sich der Druck in den Dampfkammern 36, 37 etwas abgesenkt hat, wird Kühlwasser mit entsprechenden Düsen (nicht dargestellt) in den Dampfkammern 36, 37 eingespritzt. Die Kühlwasserdüsen zerstäuben das Wasser. Die Kühlwasserdüsen sind so angeordnet, dass das zerstäubte Kühlwasser an die Formraumwandungen 33, 34 gelangt und diese kühlt. Durch das Kühlen entsteht in den Dampfkammern eine Druckverminderung bzw. ein Unterdruck. Dieser Unterdruck führt zu einer Verdampfung des Kühlwassers auf der Oberfläche der Formraumwandungen 33, 34 auch bei Temperaturen unter 100°C und sorgt so für eine schnelle Kühlung. Während des Kühlens fließt das während des Autoklavierens bzw. Nachbedampfens angesammelte Kondensat und das anschließend eingespritzte Kühlwasser aus den Dampfauslassventilen 28, 29.

Optional ist es möglich, mit einem Unterdruck (z. B. -0,5 bar (1 bar = 100 kPa)) bzw. Vakuum, das in den Dampfkammern befindliche Kondensat und Kühlwasser zu verdampfen und aus dem Formwerkzeug abzuziehen.

Beim Kühlen verringert sich der Schaumdruck mit einem exponentiellen Verlauf auf einen Schaumdruck-Sollwert. Das Kühlen wird beendet, wenn der Schaumdruck auf einen bestimmten Soll-Wert abgefallen ist. Da der Schaumdruck auch hier wiederum einem exponentiellen Verlauf folgt, kann die Dauer des Kühlens mit der beim Autoklavieren beschriebenen Methode eingestellt werden. Weiterhin ist es möglich, die zeitliche Ableitung des Schaumdruckes zu bestimmen und, wenn die Änderung des Schaumdruckes unter einem vorgeschriebenen Wert fällt, die Kühlung zu beenden. Das Kühlen kann auch beendet werden, wenn der Schaumdruck unter einen vorbestimmten Schwellenwert fällt und etwa konstant ist, oder die zweite Ableitung des Schaumdrucks eine Nullstelle überschritten hat und die erste Ableitung unter einem Schwellenwert liegt.

Nach dem Kühlen folgt das Stabilisieren. In der einfachsten Ausführungsform ist das Stabilisieren lediglich ein Warten, damit aus dem Partikelschaumstoffteil die darin enthaltene Wärme an die bereits gekühlten Formraumwandungen 33, 34 abgegeben werden kann. Das Partikelschaumstoffteil ist ein guter thermischer Isolator, weshalb dies einige Zeit dauert. Die Wände der im Partikelschaumstoffteil enthaltenen Schaumstoffpartikel und das im Inneren der Partikel enthaltene heiße Gas sollen soweit herunter gekühlt werden, dass beim späteren Entformen, der Innendruck in den Partikeln so niedrig ist, dass die Partikelwände nicht mehr plastisch verformt werden. Vorzugsweise wird beim Stabilisieren an die Dampfkammern 36, 37 ein Unterdruck bzw. ein Vakuum angelegt, um in den Dampfkammern bzw. im Partikelschaumstoffteil Feuchtigkeit zu verdampfen und hierdurch Wärme abzuziehen.

Die Dauer des Stabilisierens kann anhand der Temperatur der beiden Formhälften 12, 13 und des Schaumdrucks gesteuert werden. Der Schaumdruck folgt wiederum einem exponentiellen Verlauf, womit die oben erläuterte Methode zur Bestimmung der Dauer des Schrittes des Stabilisierens verwendet werden kann.

Ist das Partikelschaumstoffteil ausreichend stabilisiert, dann kann es entformt werden. Hierbei werden die beiden Formhälften 12, 13 auseinander gefahren, wobei mithilfe von Haltemechaniken und/oder Druckluft und/oder Vakuum das Partikelschaumstoffteil in einer bestimmten der beiden Formhälften 12, 13 gehalten wird.

Das erzeugte Partikelschaumstoffteil kann nach dem Öffnen der Formwerkzeuge 12, 13 durch Druckluft und/oder einen Stößel ausgeworfen werden. Als Stößel wird in der Regel ein Auswerfer und/oder Füllinjektor mit Auswerfefunktion verwendet wird.

Der Auswurf kann mittels einer Kamera überwacht werden, um so sicherzustellen, dass das Formwerkzeug zur Herstellung eines weiteren Partikelschaumstoffteils frei ist.

Die Formhälften 12, 13 können durch Durchleiten von Druckluft gereinigt werden.

Die Pinole kann gereinigt werden, indem Füllluft durch den geöffneten Füllinjektor geblasen wird.

Die oben erläuterten Schritte vom Füllen bis zum Entformen wiederholen sich jeweils zyklisch, wobei in einem jedem Zyklus, in einem jeden Formwerkzeug ein Partikelschaumstoffteil erzeugt wird.

Das oben erläuterte Verfahren kann auch dahingehend abgewandelt werden, dass das Formwerkzeug 3 bzw. die Formhälften 12, 13 vor und/oder nach dem Füllen mit einer entsprechenden Heizeinrichtung vorgewärmt werden. Die Heizeinrichtung ist vorzugsweise in das Formwerkzeug 3 und insbesondere in die Formraumwandungen 33, 34 integriert. Die Heizeinrichtung ist typischerweise eine elektrische Heizeinrichtung mit Heizdrähten.

Durch das zyklische Vorwärmen des Werkzeuges wird verhindert, dass der zugeführte Dampf nicht erst das Werkzeug aufwärmen muss und hierdurch Energie verliert, sondern die Wärme des Dampfes möglichst vollständig in die Schaumstoffpartikel eingetragen wird. Bei kaltem Werkzeug nimmt das Werkzeug die Wärme des Dampfes auf, wodurch die Schaumstoffpartikel zwar noch reagieren und die Zwickel schlie-βen, jedoch wird nicht immer eine ordnungsgemäße Verschweißung erzielt. Dies gilt insbesondere für den Kern des Partikelschaumstoffteils. Wenn das Partikelschaumstoffteil zunächst am Randbereich verschweißt, wird eine weitere Dampfzufuhr zum Kern des Partikelschaumstoffteils verhindert oder eingeschränkt. Das Vorheizen der Formhälften 12, 13 verringert die Gefahr, dass die Wärme des Dampfes nicht korrekt in die Schaumstoffpartikel eingetragen wird. Insbesondere nach dem Füllen bzw. während des Spülens der Kammern findet ein Vorheizen statt, da die Temperatur des Werkezeuges zu Beginn des Bedampfens (erste Querbedampfung) einen erheblichen Einfluss auf die Wärmeübertragung hat. Beim Füllen wird eine große Menge Druckluft in und durch das Formwerkzeug 3 geblasen. Je nach Drucklufttemperatur, Fülldruckeinstellung und Füllzeiten, die z. B. auf Grund von prozessabhängiger Füllendeerkennung von Zyklus zu Zyklus variieren können, stellen sich nach dem Füllen unterschiedliche Formtemperaturen ein. Diese können durch das Vorheizen ausgeglichen werden. Durch das Vorheizen mit einer Heizeinrichtung, dient das Spülen der Kammern nur der Verdrängung der Luft aus den Dampfkammern. Mit dem Spülen der Kammern muss nicht die Werkzeugtemperatur eingestellt werden. Hierdurch kann das Spülen der Kammern verkürzt werden. Dies erhöht den mit der Vorrichtung erzielbaren Durchsatz.

Die Vorrichtung kann eine Messstation zum Vermessen der erzeugten Partikelschaumstoffteile aufweisen. Die Messstation besitzt eine oder mehrere Messeinrichtungen, welche mit einer Steuereinrichtung verbunden sind. Die Steuereinrichtung ist mit der in Figur 1 dargestellten Vorrichtung zum Herstellen von Partikelschaumstoffteilen verbunden, um einen oder mehrere Stellparameter (Maschinenparameter) einzustellen.

Die Steuereinrichtung kann einen oder mehrere Regeleinrichtungen aufweisen. Die Regeleinrichtungen können unterschiedlichste Stellgrößen einstellen. Es können auch mehrere Regeleinrichtungen bzw. Regelkreise miteinander verknüpft sein, sodass mehrere Regelgrößen (Ist-Werte) einen Stellwert beeinflussen. Die Messstation weist eine oder mehrere der folgenden Messeinrichtungen auf:

- Waage
- Kamera
- Laserscanner
- Durchflusswiderstandsmesseinrichtung
- Festigkeitsmesseinrichtung

Mit den Messeinrichtungen kann jedes hergestellte Partikelschaumstoffteil untersucht werden. Es kann jedoch auch sinnvoll sein, lediglich Stichproben zu vermessen, insbesondere wenn die Messung destruktiv ist und das entsprechende Partikelschaumstoffteil zerstört.

Mit der Waage wird das Gewicht des Partikelschaumstoffteils gemessen.

Die Kamera dient zu Messung der Kontur bzw. Form und/oder der Abmessungen des Partikelschaumstoffteils. Mit der Kamera kann auch die Farbe der Oberfläche des Partikelschaumstoffteils bestimmt werden. Weiterhin können mit der Kamera gewisse Informationen zur Oberflächenstruktur erhalten werden.

Der Laserscanner dient auch zur Erfassung der Oberflächenstruktur, wobei mit dem Laserscanner sehr präzise die Kontur der Oberfläche des Partikelschaumstoffteils erfasst werden kann. Der Laserscanner ist vorzugsweise ein 3D-Laserscanner, sodass die räumliche Struktur der Oberfläche des Partikelschaumstoffteils detektierbar ist.

Die Durchflusswiderstandsmesseinrichtung dient zum Messen des Durchflusswiderstandes eines Fluids, insbesondere eines Gases, wie z. B. Luft, das durch das Partikelschaumstoffteil geleitet wird. Die Durchflusswiderstandseinrichtung weist ein Rohr auf, das auf das Partikelschaumstoffteil aufgesetzt wird. Das Partikelschaumstoffteil liegt hierbei auf einem weitmaschigen Rost, sodass auf der dem Rohr gegenüberliegenden Seite kein nennenswerter Luftwiderstand durch den Rost erzeugt wird. Das Rohr ist mit einer Druckluftquelle verbunden und weist einen Durchflusssensor auf, um den Luftdurchsatz zu messen. Hiermit kann der Durchflusswiderstand des Partikelschaumstoffteils in dem Bereich, in dem das Rohr am Partikelschaumstoffteil anliegt, gemessen werden.

Die Festigkeitsmesseinrichtung kann zur Messung der Biegsamkeit mittels eines Biegetests, der Härte mittels eines Härtetests, der Reißfestigkeit mittels eines Reißtests, bei dem die Kraft bestimmt wird, die notwendig ist, um das Partikelschaumstoffteil in zwei Teile zu zerreißen, ausgebildet sein und/oder einer Torsions-Festigkeitsmesseinrichtung aufweisen, bei welcher das Moment gemessen wird, um eine bestimmte Torsionsdrehung zu erzielen. Es kann auch ein nichtzerstörungsfreier Test zum Messen der Festigkeit des entformten Partikelschaumstoffteils an Stichproben durchgeführt werden.

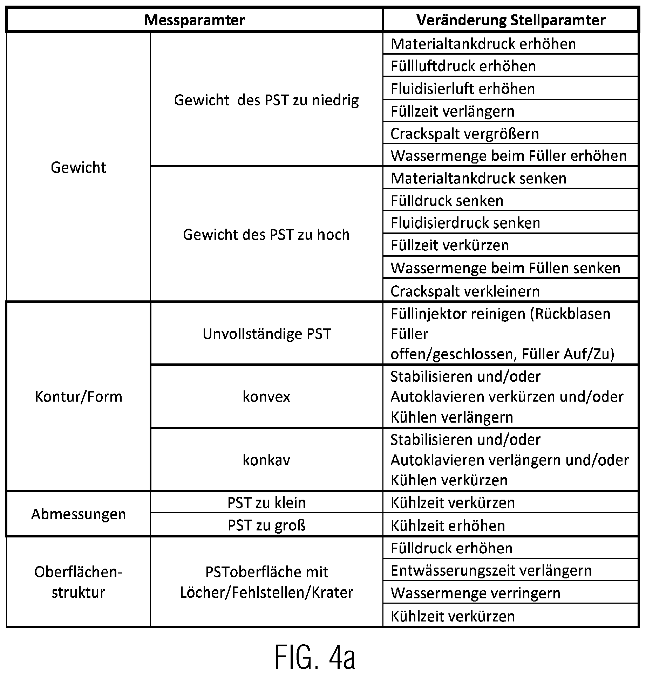

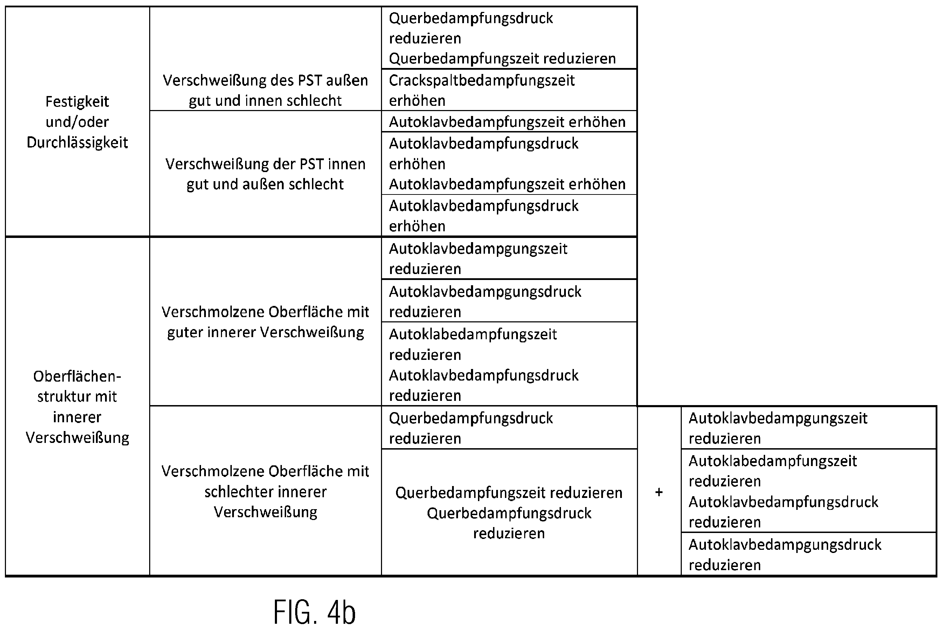

In der in Figur 4 gezeigten Tabelle sind die Messparameter, die mit entsprechenden Messeinrichtungen erfasst werden können, und die Stellparameter, auf die die jeweiligen Messparameter Einfluss haben, aufgeführt. Bei den Messparametern ist jeweils der Typ des Messparameters (z. B. Gewicht) und die Abweichung des Messparameters (z. B. Gewicht des PST zu hoch) sowie die entsprechenden Einstellungen der Stellparameter angegeben. Sind zu einer bestimmten Abweichung mehrere Stellparameter angeben, dann können sie einzeln oder in Kombination angewendet werden. Lediglich bei dem Messparameter "Oberflächenstruktur mit innerer Verschweißung" in Verbindung mit der Abweichung "Verschmolzene Oberfläche mit schlechter innerer Verschweißung" ist sowohl ein Stellparameter links vom "+" als auch ein Stellparameter rechts vom "+" in Figur 4 anzuwenden. Die Oberflächenstruktur wird bspw. mit einem Laserscanner, einer Stereokamera oder einer 3D-Laufzeitkamera abgetastet. Die innere Verschweißung kann bspw. anhand der Porosität beurteilt werden, welche, wie oben erläutert, im Formwerkzeug oder auch am entformten Partikelschaumstoffteil gemessen werden kann. Die innere Verschweißung kann auch anhand der Festigkeit des Partikelschaumstoffteils alleine oder in Kombination mit der Porosität beurteilt werden.

Ist der am entformten Partikelschaumstoffteil (PST) gemessene Messparameter ein die Oberfläche beschreibender Messparameter, insbesondere ein Messparameter, mit welchen Fehlstellen im Partikelschaumstoffteil detektierbar sind, können ein oder mehrere der Stellparameter Fülldruck beim Füllen, Entwässerungszeit nach dem Autoklavieren bzw. Stabilisieren zum Entwässern des Formwerkzeuges, die zugeführte Wasser- bzw. Dampfmenge und/oder die Kühlzeit automatisch justiert werden.

Ein sehr aussagekräftiger Messparameter des entformten Partikelschaumstoffteils (PST) ist sein Gewicht. In Abhängigkeit des Gewichtes wird vor allem der Crackspalt beim Befüllen des Formraumes mit Schaumstoffpartikeln zur Herstellung eines weiteren Partikelschaumstoffteils in Abhängigkeit von dem gemessenen Gewicht eingestellt. Ist das gemessene Gewicht größer als ein Sollgewicht, dann wird der Crack-spalt entsprechend verringert und ist das gemessene Gewicht geringer als das Sollgewicht, dann wird der Crackspalt entsprechend vergrößert. Durch die Einstellung des Crackspaltes kann die dem Formraum zugeführte Menge an Schaumstoffpartikeln justiert werden. Darüber hinaus können in Abhängigkeit des Gewichtes die weiteren Stellparameter Materialtankdruck, Füllluftdruck und/oder Füllzeit in Abhängigkeit des gemessenen Gewichts variiert werden.

Die Einstellung dieser Parameter in Abhängigkeit vom Gewicht ist vorzugsweise bei Verwendung von Schaumstoffpartikeln auf Polyurethanbasis von Vorteil, da hier bereits eine geringe Mengenabweichung von einer Sollmenge an Schaumstoffpartikeln erhebliche Qualitätsunterschiede verursachen kann.

Mit diesen am entformten Partikelschaumstoffteil detektierten Messparametern werden vorzugsweise die Dauer einzelner bestimmter Schritte oder Teilschritte des Herstellungsprozesses und/oder ein vorbestimmter Druck und/oder eine vorgeschriebene Temperatur automatisch eingestellt.

Weiterhin kann am entformten Partikelschaumstoffteil (PST) als Messparameter eine geometrische Form (Kontur) detektiert werden. Als solche geometrische Form wird insbesondere der Verlauf einer bestimmten Oberfläche bzw. Kante verstanden. Die Oberfläche weist einen bestimmten Sollverlauf auf, der konkav, ebenflächig oder konvex ausgebildet sein oder mit entsprechenden unterschiedlichen Abschnitten ausgebildet sein kann. Ist die gemessene geometrische Form stärker konvex als eine Sollform, dann wurden die einzelnen Schaumstoffpartikel zu stark expandiert. Die Expansion der Schaumstoffpartikel kann durch die Dauer des Stabilisierens, Autoklavierens und/oder Kühlens beeinflusst werden. Wird eine zu starke Expansion durch die gemessene geometrische Form detektiert, dann ist das Stabilisieren und/oder Autoklavieren zur verkürzen oder das Kühlen zu verlängern.

Vorzugsweise werden als Regelgrößen nicht nur die mit der Messstation erfassbaren Messparameter, sondern auch die in der Vorrichtung 1 erfassbaren Parameter als Eingangsgrößen bzw. Regelgrößen für die Regeleinrichtung verwendet.

Die Regeleinrichtung ist vorzugsweise ein selbstlernendes System, insbesondere ein neuronales Netzwerk, mit welchem eine Vielzahl unterschiedlicher Eingangsparameter erfasst und eine Vielzahl von Stellparametern abgebildet werden können. Die Messparameter sind die Eingangsparameter des neuronalen Netzwerkes und die Stellparameter die Ausgangsparameter. In der Lernphase des neuronalen Netzwerkes wird die Qualität der produzierten Partikelschaumstoffteile manuell bestimmt und eingegeben. Nach der Lernphase erzeugt die Vorrichtung automatisch Partikelschaumstoffteile mit der während der Lernphase eingeprägten Qualität, wobei die Regeleinrichtung selbstständig Verän-

derungen in der Materialbeschaffenheit der Schaumstoffpartikel, der zugeführten Medien und aufgrund der Verwendung von unterschiedlichen Formwerkzeugen kompensiert.

**Beispiel 1**

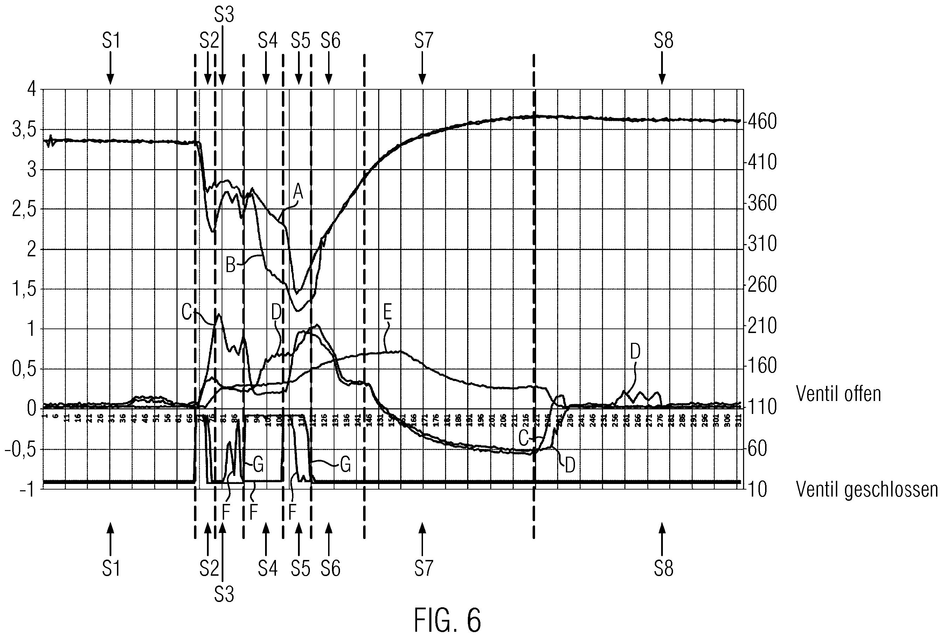

Nachfolgend wird ein Ausführungsbeispiel zum Herstellen eines Partikelschaumstoffteils aus Schaumstoffpartikeln aus Polystyrol näher erläutert. Figur 6 zeigt die entsprechenden Druckverläufe und die Ventilstellungen der Dampfauslassventile. Hierbei wird die in Figur 2 gezeigte Vorrichtung verwendet.

In dem Diagramm sind folgende Kurven aufgetragen:

- A: Druck in der Dampfleitung 15, die zur ersten Dampfkammer 36 führt;
- B: Druck in der Dampfleitung 16, die zur zweiten Dampfkammer 37 führt;
- C: Druck in der ersten Dampfkammer 36;
- D: Druck in der zweiten Dampfkammer 37;
- E: Druck im Formraum 14 (Schaum);
- F: Ventilstellung des Dampfeinlassventils 24 der ersten Dampfkammer 36;
- G: Ventilstellung des Dampfeinlassventils 25 der zweiten Druckkammer 37

**Füllen des Formraums (S1)**

Beim Füllen des Formraums (ohne Crackspalt) liegt in den Dampfkammern 36, 37 kein Überdruck vor. Lediglich auf Grund des Verdrängens der Luft aus dem Formraum 14 in den Dampfkammern 36, 37 wird kurzzeitig ein geringer Überdruck gemessen (Drücke C, D). Da die Einlassventile 24, 25 und die Dampfauslassenventile 28, 29 geschlossen sind, sind die Drücke in den Dampfleitungen 15, 16 und in den Auslassleitungen konstant.

**Spülen (S2)**

Beim Spülen nehmen die Drücke C, D in der ersten und zweiten Druckkammer 36, 37 zu und die Drücke A, B in den Dampfleitungen 15, 16 nehmen entsprechend ab. Die Dampfeinlassenventile 24, 25 (Kurven F, G) sind offen.

**Querdampf 1 (S3)**

Bei der ersten Querbedampfung (Querdampf 1) sind das Dampfeinlassventil 25 (Kurve G) und das Dampfauslassventil 28 geschlossen . Hier wird Dampf von der Dampfleitung 15 über das Dampfeinlassventil 24 Kurve F) in die erste Dampfkammer 36 zugeführt, wovon der Dampf durch den Formraum 14 in die zweite Dampfkammer 37 strömt. Vom Spülen (S2) ist der der Druck in der ersten Dampfkammer 36 noch so hoch, dass das Dampfeinlassventil 24 zunächst noch geschlossen bleiben kann und erst während der ersten Querbedampfung allmählich geöffnet wird. Die Öffnungsstellung der Dampfeinlassventile 24, 25 wird in Abhängigkeit des in der jeweiligen Dampfkammer 36, 37 herrschenden Druckes geregelt. Von der zweiten Dampfkammer 37 tritt der Dampf am Dampfauslassventil 29 aus. Da durch die Schaumstoffpartikel im Formraum 14 dem Dampfstrom ein Widerstand entgegensteht, nimmt der Dampfdruck C in der ersten Dampfkammer 36 weiter zu.

Da sich die Schaumstoffpartikel während der Querbedampfung ausdehnen, erhöht sich der Schaumdruck E im Formraum 14.

**Querdampf 2 (S4)**

Bei der zweiten Querbedampfung sind das Einlassventil 24 (Kurve F) und das Auslassventil 29 geschlossen und sind das Einlassventil 25 (Kurve G) und das Auslassventil 28 geöffnet, sodass Dampf von der zweiten Dampfleitung 16 in die zweite Dampfkammer 37 zugeführt wird. Der Dampf strömt von der zweiten Dampfkammer durch den Formraum 14 in die erste Dampfkammer 36 und von dort durch das Auslassventil 28 ab. Da die Schaumstoffpartikel im Formraum 14 wiederum einen Strömungswiderstand darstellen, erhöht sich der Dampfdruck in der zweiten Dampfkammer 37 und der Dampfdruck C in der ersten Dampfkammer 36 fällt etwas ab.

Der Schaumdruck E nimmt nur geringfügig zu. Der Schaumdruck E wird im Formraum 14 auf der zur ersten Dampfkammer 36 weisenden Seite gemessen. Würde man auf der anderen Seite des Formraumes 14 eine Messung des Schaumdruckes vornehmen, dann würde er hier entsprechend ansteigen, da sich einerseits der Dampf an den Schaumstoffpartikeln staut und zu einer Druckerhöhung führt, und andererseits die Schaumstoffpartikel auf der zur zweiten Dampfkammer weisenden Seite stark erwärmt werden, wodurch sie expandieren und somit den Druck erhöhen.

Der Schaumdruck E und der Druck in der ersten Druckkammer C sind gleich und nehmen synchron zu. Die Messung zeigt einen geringen Versatz, der durch die Messtoleranz verursacht ist.

**Autoklavieren (S5)**

Beim Autoklavieren sind beide Druckauslassventile 28, 29 geschlossen. Die beiden Einlassventile 24, 25 (Kurven F, G) sind offen. Hierdurch erhöht sich der Druck in den Dampfkammern 36, 37, wobei er etwa auf den gleichen Wert eingestellt (Kurven C, D) wird. Der Schaumdruck E steigt auf Grund der Expansion der Schaumstoffpartikel weiter an. Im vorliegenden Ausführungsbeispiel wird das erste Druckeinlassventil 24 (Kurve F) während des Autoklavierens früher geschlossen als das zweite Druckeinlassventil 15 (Kurve G). Der Grund hierfür ist wohl eine unsymmetrische Dichtheit des Formwerkzeuges 3.

**Kühlen (S6)**

Beim Kühlen sind die Dampfauslassventile 28, 29 geöffnet, um den vorhandenen Überdruck abzubauen. Nachdem sich der Druck in den Dampfkammern 36, 37 etwas abgesenkt hat, wird Kühlwasser eingespritzt. Die Drücke C, D in der ersten und in der zweiten Dampfkammer 36, 37 fallen deshalb ein Stück ab. Der Schaumdruck E nimmt weiterhin zu, da die Schaumstoffpartikel auf Grund der im Formraum 14 noch befindlichen Wärme sich expandieren.

**Stabilisieren (S7)**

Beim Stabilisieren wird ein Unterdruck angelegt. Hierdurch wird aus den Dampfkammern bzw. aus dem Partikelschaumstoffteil Feuchtigkeit und Wärme abgezogen. Hierdurch verringern sich die Drücke C, D in der ersten und der zweiten Dampfkammer auf einen Wert von -0,5 bar, wobei 0 bar dem Atmosphärendruck entspricht. Der Schaumdruck E im Formraum verringert sich auch dementsprechend, wobei die Druckabnahme verzögert einsetzt. Die Schaumstoffpartikel sind zunächst noch heiß und expandieren etwas. Der Schaumdruck E im Formraum 14 verringert sich auf Grund des Abkühlens exponentiell. Das Stabilisieren wird nach einem Ablauf von etwa dem zwei- bis vierfachen der Zeitkonstante $\tau$ des exponentiellen Druckabfalls des Schaumdruckes E beendet.

**Entformen (S8)**

Beim Entformen wird das Formwerkzeug und damit der Formraum 14 geöffnet. Sowohl in den Dampfkammern 36, 37 als auch im Formraum stellt sich Atmosphärendruck ein.

**Beispiel 2**

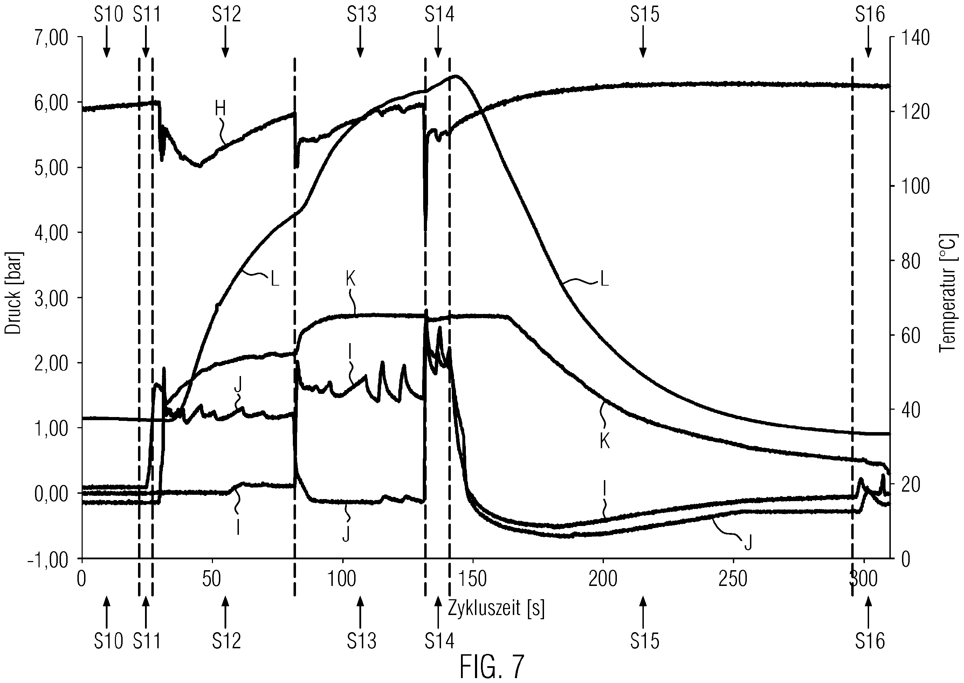

Nachfolgend wird ein zweites Ausführungsbeispiel zum Herstellen eines Partikelschaumstoffteils aus Schaumstoffpartikeln aus Polyurethan (eTPU) näher erläutert. Figur 7 zeigt die entsprechenden Druckverläufe eines Herstellungszyklus. Hierbei wird die in Figur 2 gezeigte Vorrichtung verwendet.

In dem Diagramm sind folgende Kurven aufgetragen:

- H: Druck in der Dampfleitung 15, die zur ersten Dampfkammer 36 führt;
- I: Druck in der ersten Dampfkammer 36;
- J: Druck in der zweiten Dampfkammer 37;
- K: Druck im Formraum 14 (Schaumdruck);
- L: Temperatur im Formraum 14.

**Füllen des Formraums (S10)**

Beim Füllen des Formraums (mit Crackspalt) liegt in den Dampfkammern 36, 37 kein Überdruck (Kurven I, J) vor.

**Schließen des Crackspaltes (S11)**

Beim Schließen des Crackspaltes steigt der Schaumdruck (Kurve K) an, da die Schaumstoffpartikel im Formraum 14 zusammengedrückt werden.

**Querdampf 1 (S12)**

Bei der ersten Querbedampfung sind das Dampfeinlassventil 24 und das Dampfauslassventil 29 geschlossen und das Einlassventil 25 und das Auslassventil 28 geöffnet, sodass Dampf von der zweiten Dampfleitung 16 in die zweite Dampfkammer 37 zugeführt wird. Der Dampf strömt von der zweiten Dampfkammer 37 durch den Formraum 14 in die erste Dampfkammer 36 und von dort durch das Auslassventil 28 ab.

Da die Schaumstoffpartikel im Formraum 14 einen Strömungswiderstand darstellen, erhöht sich der Dampfdruck J in der zweiten Dampfkammer 37 und der Dampfdruck I in der ersten Dampfkammer 36 bleibt etwa konstant auf 0.

Da sich die Schaumstoffpartikel während der Querbedampfung ausdehnen, erhöht sich der Schaumdruck K im Formraum 14.

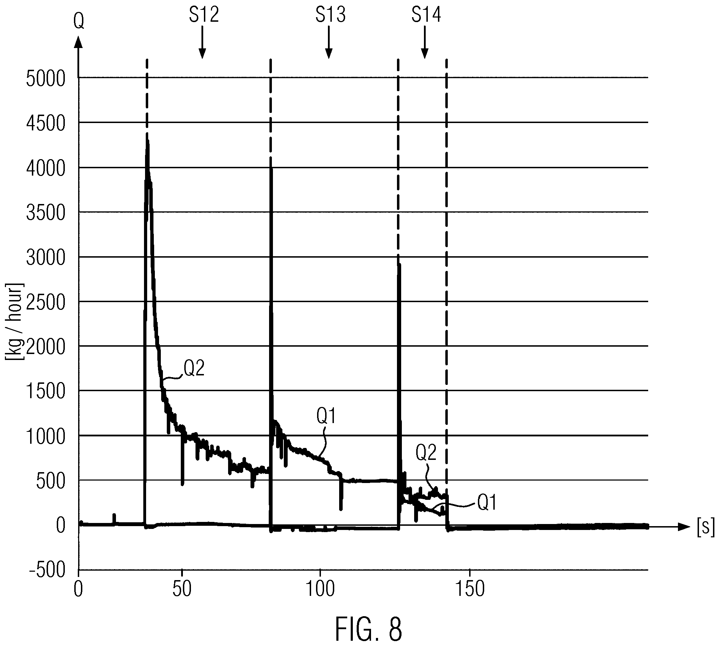

Der Dampffluss von der zweiten Dampfkammer 37 in den Formraum 14 wird bei der ersten Querbedampfung mit dem Gasflussmessgerät 49 als Massestrom Q2 gemessen (Fig. 8). Dieser Massestrom weist einen exponentiellen Abfall auf. Die Zeitkonstante $\tau$ des exponentiellen Abfalls wird bestimmt. Die erste Querbedampfung wird nach einem vorbestimmten Vielfachen der Zeitkonstante $\tau$ automatisch beendet. Das Vielfache ist vorzugsweise das Dreifache der Zeitkonstante $\tau$. Es kann auch zweckmäßig sein, im Bereich des zwei- bis vierfachen der Zeitkonstante $\tau$ des exponentiellen Abfalls des Massestroms die Querbedampfung zu beenden.

**Querdampf 2 (S13)**

Bei der zweiten Querbedampfung sind das Dampfeinlassventil 25 und das Dampfauslassventil 28 geschlossen. Hier wird Dampf von der Dampfleitung 15 über das Dampfeinlassventil 24 in die erste Dampfkammer 36 zugeführt, von wo aus der Dampf durch den Formraum 14 in die zweite Dampfkammer 37 strömt. Von der zweiten Dampfkammer 37 tritt der Dampf am Dampfauslassventil 29 aus. Da durch die Schaumstoffpartikel im Formraum 14 dem Dampfstrom ein Widerstand entgegensteht, nimmt der Dampfdruck I in der ersten Dampfkammer 36 zu, wohingegen der Dampfdruck J in der zweiten Dampfkammer 37 auf etwa 0 bar abfällt.

Durch den Wärmeeintrag mittels des Dampfes steigt die Temperatur L im Formraum 14 weiter an, weshalb sich die Schaumstoffpartikel weiter ausdehnen und sich der Schaumdruck K weiter erhöht.

Auch die zweite Querbedampfung wird genauso wie die erste Querbedampfung nach einem vorbestimmten Vielfachen der Zeitkonstante $\tau$ des exponentiellen Abfalls des Massestroms Q1 (Fig. 8) automatisch beendet.

**Autoklavieren (S14)**

Beim Autoklavieren sind beide Druckauslassventile 28, 29 geschlossen. Die beiden Einlassventile 24, 25 sind offen. Hierdurch erhöhen sich die Drücke I, J in den Dampfkammern 36, 37, wobei sie etwa auf den gleichen Wert ansteigen. Der Schaumdruck K bleibt etwa konstant, obwohl die Temperatur im Formraum 14 nochmals geringfügig auf etwa 130°C ansteigt. Das hier verwendete eTPU ist bereits nach der zweiten Querbedampfung vollständig expandiert. Ein anderes Material oder eine andere Sorte von eTPU kann während des Autoklavierens weiter expandieren und den Schaumdruck weiter erhöhen.

Beim Autoklavieren ist es grundsätzlich genauso wie beim Querbedampfen möglich, die Dauer des Autoklavierens nach einem vorbestimmten Vielfachen der Zeitkonstante $\tau$ des exponentiellen Abfalls des Massestroms Q1 und/oder des Massestroms Q2 (Fig. 8) automatisch zu beenden. Hier kann es jedoch sein, dass der exponentielle Abfall nicht so ausgeprägt ist, wie es bei den Querbedampfungen der Fall ist, weshalb auch eine andere Steuerung der Zeitdauer des Autoklavierens zweckmäßig sein kann.

**Kühlen/Stabilisieren (S15)**

Das Kühlen und Stabilisieren wird in diesem Ausführungsbeispiel in einem Schritt ausgeführt, da die Dampfauslassventile 28, 29 geöffnet werden, um den vorhandenen Überdruck abzubauen und gleichzeitig ein Unterdruck angelegt wird. Nachdem sich der Druck in den Dampfkammern 36, 37 etwas abgesenkt hat, wird Kühlwasser eingespritzt. Die Drücke I, J in der ersten und in der zweiten Dampfkammer 36, 37 fallen deshalb ein Stück ab. Durch das Anlegen des Unterdrucks wird aus den Dampfkammern bzw. aus dem Partikelschaumstoffteil Feuchtigkeit und Wärme abgezogen. Hierdurch verringern sich die Drücke I, J in der ersten und der zweiten Dampfkammer auf einen Wert von -0,5 bar, wobei 0 bar dem Atmosphärendruck entspricht. Dieser Unterdruck wird dann wieder allmählich abgebaut.

Der Schaumdruck K bleibt zunächst etwa konstant. Danach verringert sich der Schaumdruck K im Formraum. Der Schaumdruck K im Formraum 14 verringert sich auf Grund des Abkühlens exponentiell. Das Kühlen und Stabilisieren wird nach einem vorbestimmten Vielfachen, insbesondere dem dreifachen, der Zeitkonstante $\tau$ automatisch beendet. Es kann auch sinnvoll sein, nachdem etwa die zwei- bis vierfache Zeit der der Zeitkonstante $\tau$ des exponentiellen Druckabfalls des Schaumdruckes K vergangen ist, das Kühlen/Stabilisieren automatisch zu beenden.

Anstelle des exponentiellen Druckabfalls K kann auch der exponentielle Abfall der Temperatur L im Formraum (Fig. 7) als charakteristische Größe zum Steuern der Dauer des Kühlens/Stabilisierens verwendet werden.

**Entformen (S16)**

Beim Entformen wird das Formwerkzeug und damit der Formraum 14 geöffnet. Sowohl in den Dampfkammern 36, 37 als auch im Formraum stellt sich Atmosphärendruck ein.

Bei diesem Ausführungsbeispiel wird die Dauer des Querbedampfens automatisch anhand der Zeitkonstante $\tau$ gesteuert. Beim Querbedampfen findet ein teilweises Verschweißen der Schaumstoffpartikel statt. Hierdurch verringert sich die Porosität bzw. Dampfdurchlässigkeit. Wird die Querbedampfung zu kurz durchgeführt, dann sind nicht alle Schaumstoffpartikel am Endprodukt ausreichend verschweißt und die Festigkeit ist beeinträchtigt. Wird die Querbedampfung hingegen zu lange ausgeführt, dann kann an der Seite, an der der Dampf zugeführt, das Partikelschaumstoffteil fast vollständig verschweißt bzw. "verhautet" werden, wodurch der weitere Dampffluss in den nachfolgenden Schritten (zweite Querbedampfung, Autoklavieren) beeinträchtigt ist. Hierdurch kann der Dampf in den nachfolgenden Schritten nicht ordnungsgemäß zugeführt werden und es wird keine korrekte Verschweißung des Schaumstoffpartikelteils erzielt. Mit der automatischen Steuerung anhand der Zeitkonstante $\tau$ stellt sich die geeignete Zeitdauer dieser Verfahrensschritte selbständig ein und es wird immer in etwa die gleiche Porosität nach den jeweiligen Verfahrensschritten erzielt. Hierdurch ist es möglich unterschiedlich große oder unterschiedlich geformte Schaumstoffpartikelteile zu produzieren, wobei lediglich die entsprechenden Formwerkzeuge auszutauschen sind und keine manuelle Einstellung der Produktionsparameter notwendig ist. Dies ermöglicht eine flexible und schnelle Produktion unterschiedlichster Schaumstoffpartikelteile.

**Beispiel 3**

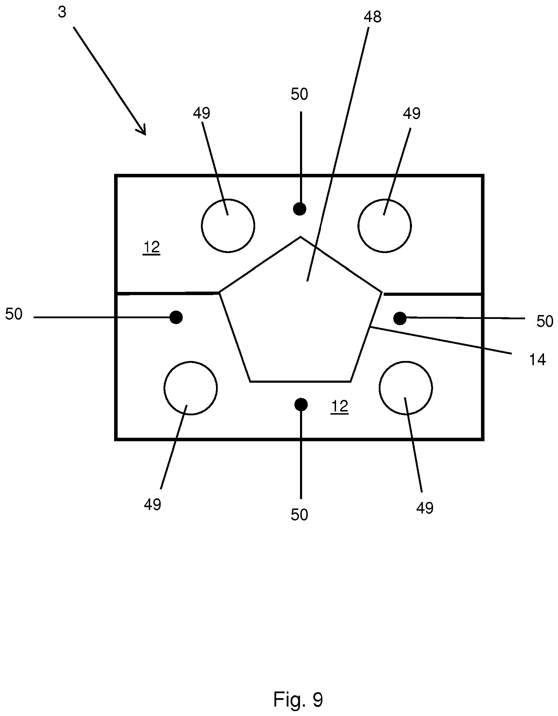

Das Verfahren zum Steuern eines Endzeitpunktes eines Teilschrittes oder eines Schrittes eines Herstellungsprozesses eines Bauteils 48 kann auch ein Gießverfahren betreffen. Nachfolgend wird ein drittes Ausführungsbeispiel zum Herstellen eines Bauteils 48 mittels Gießen näher erläutert (Figur 9).

Beim Gießen entsteht aus flüssigem Werkstoff, vorzugsweise flüssigem Metall, nach dem Erstarren ein Bauteil 48 in bestimmter Form.

Beispielsweise kann zum Gießen ein wiederverwendbares Formwerkzeug 3, wie zum Beispiel eine Kokille, verwendet werden. Das Formwerkzeug 3 beziehungsweise die Kokille begrenzt einen Formraum 14.

Das Formwerkzeug 3 kann beispielsweise aus zwei Formhälften 12 ausgebildet sein. In den Formhälften 12 sind Kühlkanäle 49 als Bestandteil eines Kühlkreislaufs (nicht dargestellt) ausgebildet. Der Kühlkreislauf 49 weist eine Pumpe (nicht dargestellt) zum Beaufschlagen der Kühlkanäle mit einem Kühlmedium, wie zum Beispiel Wasser, auf.

Weiterhin sind in den Formhälften 12 Temperatursensoren 50, beispielsweise vier, zum Überwachen der Temperatur des Formwerkzeugs 3 vorgesehen.

Gemäß dem erfindungsgemäßen Verfahren wird in einem ersten Schritt der Formraum 14 des Formwerkzeuges 3 mit einem zu verfestigendem Material, wie zum Beispiel flüssigem Metall, befüllt.

Anschließend erfolgt ein Stabilisierungs- bzw. Kühlschritt bei dem das Formwerkzeug 3 und somit das Bauteil 48 über den Kühlkreislauf bzw. die Kühlkanäle 49 abgekühlt wird.

Während des Abkühlens werden mit den Sensoren 50 die Temperaturen in verschiedenen Bereichen des Formwerkzeugs 3 gemessen. Die gemessenen Temperaturen weisen beim Abkühlen einen exponentiellen Verlauf auf. Die Temperatur des Formwerkzeugs 3 stellt dabei die charakteristische Größe dar, die zum Durchführen des erfindungsgemäßen Verfahrens gemessen wird.

Anhand mehrerer aufeinander folgenden Messungen der Temperaturen in verschiedenen Bereichen der Formhälften 12 wird die Zeitkonstante der exponentiellen Änderung bestimmt.

Der Stabilisierungsschritt bzw. das Abkühlen wird beendet nachdem eine Zeitdauer durchgeführt wurde, die einem vorbestimmten Vielfachen der Zeitkonstante entspricht

Gemäß einem Aspekt der vorliegenden Erfindung wird somit die Temperatur mehrfach abgetastet bzw. gemessen, wobei zumindest drei Messungen der Temperatur erfolgen sollten. Bevorzugt werden mehr als drei Messungen der Temperatur durchgeführt. Anhand der gemessenen Temperaturwerte und der jeweiligen Zeitpunkte, an welchen die Temperaturwerte gemessen worden sind, wird die exponentielle Änderung der Temperaturwerte bestimmt. Aus diesem exponentiellen Verlauf kann die Zeitkonstante $\tau$ abgeleitet werden. Im vorliegenden Ausführungsbeispiel wird das Kühlen nach Ablauf einer Zeitdauer beendet, die der dreifachen Zeitkonstante $\tau$ entspricht. Dies bedeutet, dass die Soll-Temperatur des Abkühlens zu mehr als 95 % erreicht worden ist, ohne dass eine explizite Soll-Schaumdruck vorgegeben werden muss.

Nachdem der Abkühlschritt beendet wurde, wird der Formraum 14 entformt bzw. werden die beiden Formhälften 12 voneinander getrennt und das hergestellte Bauteil 48 kann entnommen werden.

Bezugszeichenliste

| | |
|---|---|
| 1 | Vorrichtung |
| 2 | Materialbehälter |
| 3 | Formwerkzeug |
| 4 | Förderleitung |
| 5 | Boden |
| 6 | Druckluftleitung |
| 7 | Druckluftquelle |
| 8 | Treibdüse |
| 9 | Druckluftleitung |
| 10 | Füllinjektor |
| 11 | Druckluftleitung |
| 12 | Formhälfte |
| 13 | Formhälfte |
| 14 | Formraum |
| 15 | Dampfleitung |
| 16 | Dampfleitung |
| 17 | Dampfgenerator |
| 18 | Dampfleitung |
| 19 | Dampfleitung |
| 20 | Dampfleitung |
| 21 | Dampfleitung |
| 22 | Anschlussstelle |
| 23 | Schieber |
| 24 | Dampfeinlassventil |
| 25 | Dampfeinlassventil |
| 28 | Dampfauslassventil |
| 29 | Dampfauslassventil |
| 33 | Formraumwandung |
| 34 | Formraumwandung |
| 35 | Dampfdüse |
| 36 | Dampfkammer |
| 37 | Dampfkammer |
| 38 | Wandung |
| 39 | Dampfeinlasskanal |
| 40 | Dampfauslasskanal |
| 41 | Düse |
| 42 | Gehäuse |
| 43 | Düsenrohr |
| 44 | Pinole |
| 45 | Verschlusszapfen |
| 46 | Pneumatikkolben |
| 47 | Öffnung |
| 48 | Bauteil |
| 49 | Kühlkanäle |
| 50 | Temperatursensoren |

## Patentansprüche

1. Verfahren zum Steuern eines Schrittes eines mit einer Maschine automatisch ausgeführten Prozesses, **dadurch gekennzeichnet,**

   **dass** mit einem Sensor eine für einen Schritt charakteristische Größe gemessen wird, welche einen exponentiellen Verlauf aufweist, und

anhand mehrerer aufeinanderfolgender Messungen der charakteristischen Größe eine Zeitkonstante der exponentiellen Änderung bestimmt wird, und der Schritt beendet wird, nachdem er eine Zeitdauer durchgeführt wurde, die einem vorbestimmten Vielfachen der Zeitkonstante entspricht, wobei der Prozess ein Gießverfahren ist und die folgenden Schritte umfasst

- Füllen eines Formraums mit einem zu verfestigendem Material,
- Entformen des Formraums.

**2.** Verfahren nach Anspruch 1,
**dadurch gekennzeichnet,**

**dass** dem Schritt Füllen eines in einem Formwerkzeug (3) ausgebildeten Formraums (14) mit zu verfestigendem Material, ein Abkühlen des Formraums als Stabilisierungsschritt
folgt, wobei während des Stabilisierungsschrittes das Formwerkzeug (3) und/oder ein aus dem zu verfestigenden Material gebildeter Bauteilkörper gekühlt wird, bspw. durch Zuführen von Kühlwasser oder Kühlluft in in dem Formwerkzeug (3) ausgebildeten Kühlkanälen (49).

**3.** Verfahren nach Anspruch 1 bis 2,
**dadurch gekennzeichnet,**
**dass** die charakteristische Größe des Stabilisierungsschrittes die Temperatur im Formraum oder die Temperatur des Formwerkzeuges (3) ist.

**4.** Verfahren zum Steuern eines Schrittes eines mit einer Maschine automatisch ausgeführten Prozesses,
**dadurch gekennzeichnet,**

**dass** mit einem Sensor eine für einen Schritt charakteristische Größe gemessen wird, welche einen exponentiellen Verlauf aufweist, und
anhand mehrerer aufeinanderfolgender Messungen der charakteristischen Größe eine Zeitkonstante der exponentiellen Änderung bestimmt wird, und der Schritt beendet wird, nachdem er eine Zeitdauer durchgeführt wurde, die einem vorbestimmten Vielfachen der Zeitkonstante entspricht, wobei der Prozess ein Verfahren zum Herstellen von Partikelschaumstoffteilen ist und folgende Schritte umfasst:

- Füllen eines Formraums (14) mit Schaumstoffpartikeln,
- Verschweißen der Schaumstoffpartikel zu einem Partikelschaumstoffteil,
- Entformen des Formraums (14), wobei der Formraum (14) geöffnet wird und das Partikelschaumstoffteil entnommen wird.

**5.** Verfahren nach Anspruch 4,
**dadurch gekennzeichnet,**
**dass** beim Verschweißen zunächst Wärme den Schaumstoffpartikeln zugeführt wird und danach die Schaumstoffpartikel während eines Stabilisierungsschrittes abgekühlt werden, und

- die charakteristische Größe des Stabilisierungsschrittes der Druck oder die Temperatur im Formraum (14) ist.

**6.** Verfahren nach Anspruch 5,
**dadurch gekennzeichnet,**
**dass** während des Stabilisierungsschrittes das Formwerkzeug (3) und/oder der Partikelschaumstoffkörper gekühlt wird, bspw. durch Zuführen von Kühlwasser oder Kühlluft.

**7.** Verfahren nach einem der Ansprüche 4 bis 6,
**dadurch gekennzeichnet,**
**dass** beim Verschweißen eine Querbedampfung ausgeführt wird, bei welcher den Schaumstoffpartikeln Wasserdampf zugeführt wird, wobei die charakteristische Größe der Querbedampfung der Dampfverbrauch oder der Druck oder die Temperatur im Formraum ist.

**8.** Verfahren nach einem der Ansprüche 1 bis 7,
**dadurch gekennzeichnet,**
**dass** das vorbestimmte Vielfache der Zeitkonstante das 2- bis 4-fache und insbesondere das 2,5- bis 3,5-fache der Zeitkonstante beträgt.

## Claims

1. A method for controlling a step of a process carried out automatically with a machine,
**characterized in that**

a sensor is used to measure a variable which is characteristic of a step and has an exponential course, and a time constant of the exponential change is determined on the basis of a plurality of successive measurements of the characteristic variable, and the step is terminated after it has been carried out for a period of time that corresponds to a predetermined multiple of the time constant, the process being a casting process and comprising the following steps:

- filling a mold space with a material to be solidified,
- demolding the mold space.

2. The method according to claim 1,
**characterized in that**
the step of filling the mold space (14) formed in a molding tool (3) with material to be solidified is followed by cooling the mold space as a stabilization step, the molding tool (3) and/or a component body formed from the material to be solidified being cooled during the stabilization step, for example by supplying cooling water or cooling air in cooling channels (49) formed in the molding tool (3).

3. The method according to claim 1 to 2,
**characterized in that**
the characteristic variable of the stabilization step is the temperature in the mold space or the temperature of the molding tool (3).

4. A method for controlling a step of a process carried out automatically with a machine,
**characterized in that**

a sensor is used to measure a variable which is characteristic of a step and has an exponential course, and a time constant of the exponential change is determined on the basis of a plurality of successive measurements of the characteristic variable, and the step is terminated after it has been carried out for a period of time that corresponds to a predetermined multiple of the time constant, the process being a method for producing particle foam parts and comprising the following steps:

- filling a mold space (14) with foam particles,
- bonding the foam particles to form a particle foam part,
- demolding the mold space (14), wherein the mold space (14) is opened and the particle foam part is removed.

5. The method according to claim 4,
**characterized in that**
heat is first supplied to the foam particles during bonding and then the foam particles are cooled during a stabilization step, and

- the characteristic variable of the stabilization step is the pressure or the temperature in the mold space (14).

6. The method according to claim 5,
**characterized in that**
during the stabilization step, the molding tool (3) and/or the particle foam part is cooled, for example by supplying cooling water or cooling air.

7. The method according to any one of claims 4 to 6,
**characterized in that**
during bonding a cross-steaming is carried out, in which water vapor is supplied to the foam particles, the characteristic variable of the cross-steaming being the steam consumption or the pressure or the temperature in the mold space.

**8.** The method according to any one of claims 1 to 7,
**characterized in that**
the predetermined multiple of the time constant is 2 to 4 times and in particular 2.5 to 3.5 times the time constant.

**Revendications**

**1.** Procédé de commande d'une étape d'un processus exécuté automatiquement par une machine,
**caractérisé en ce que**

un capteur est utilisé pour mesurer une variable qui est caractéristique d'une étape et qui a une évolution exponentielle, et
une constante de temps de la variation exponentielle est déterminée sur la base d'une pluralité de mesures successives de la variable caractéristique, et l'étape est terminée après avoir été exécutée pendant une période de temps qui correspond à un multiple prédéterminé de la constante de temps, le processus étant un procédé de moulage et comprenant les étapes suivantes :

- le remplissage d'un espace de moulage avec un matériau à solidifier,
- le démoulage de l'espace de moulage.

**2.** Le procédé selon la revendication 1,
**caractérisé en ce que**
l'étape de remplissage de l'espace de moulage (14) formé dans un outil de moulage (3) avec un matériau à solidifier est suivie par le refroidissement de l'espace de moulage en tant qu'étape de stabilisation, l'outil de moulage (3) et/ou un corps de composant formé à partir du matériau à solidifier étant refroidis pendant l'étape de stabilisation, par exemple en fournissant de l'eau de refroidissement ou de l'air de refroidissement dans des canaux de refroidissement (49) formés dans l'outil de moulage (3).

**3.** Le procédé selon la revendication 1 à 2,
**caractérisé en ce que**
la variable caractéristique de l'étape de stabilisation est la température dans l'espace de moulage ou la température de l'outil de moulage (3).

**4.** Procédé de commande d'une étape d'un processus exécuté automatiquement par une machine,
**caractérisé en ce que**

un capteur est utilisé pour mesurer une variable qui est caractéristique d'une étape et qui a une évolution exponentielle, et
une constante de temps de la variation exponentielle est déterminée sur la base d'une pluralité de mesures successives de la variable caractéristique, et l'étape est terminée après avoir été exécutée pendant une période de temps qui correspond à un multiple prédéterminé de la constante de temps, le processus étant un procédé de production de pièces en mousse de particules et comprenant les étapes suivantes :

- le remplissage d'un espace de moulage (14) avec des particules de mousse,
- le soudage des particules de mousse pour former une pièce en mousse de particules,
- le démoulage de l'espace de moulage (14), dans lequel l'espace de moulage (14) est ouvert et la pièce en mousse de particules est retirée.

**5.** Le procédé selon la revendication 4,
**caractérisé en ce que**
la chaleur est d'abord fournie aux particules de mousse pendant le soudage, puis les particules de mousse sont refroidies au cours d'une étape de stabilisation, et

- la variable caractéristique de l'étape de stabilisation est la pression ou la température dans l'espace de moulage (14).

**6.** Le procédé selon la revendication 5,
**caractérisé en ce que**
pendant l'étape de stabilisation, l'outil de moulage (3) et/ou la pièce en mousse de particules sont refroidis, par exemple en fournissant de l'eau de refroidissement ou de l'air de refroidissement.

**7.** Le procédé selon l'une quelconque des revendications 4 à 6,
**caractérisé en ce que**
pendant le soudage, une vaporisation croisée est effectuée, dans laquelle de la vapeur d'eau est fournie aux particules de mousse, la variable caractéristique de la vaporisation croisée étant la consommation de vapeur ou la pression ou la température dans l'espace de moulage.

**8.** Le procédé selon l'une des revendications 1 à 7,
**caractérisé en ce que**
le multiple prédéterminé de la constante de temps est de 2 à 4 fois et en particulier de 2,5 à 3,5 fois la constante de temps.

1
2
3
4
5
6
7
8
9
10
11
12
13
14
15
16
17
18
19
20
21
22
23
24
25
28
29
48
49

FIG. 1

41
39
41
41
41
40

FIG. 3

16
25
39
14
37
13
10
44
46
4
47
15
24
39
36
12
45
40
29
40
28

FIG. 2

| Messparamter | | Veränderung Stellparamter |
|---|---|---|
| Gewicht | Gewicht des PST zu niedrig | Materialtankdruck erhöhen |
| | | Füllluftdruck erhöhen |
| | | Fluidisierluft erhöhen |
| | | Füllzeit verlängern |
| | | Crackspalt vergrößern |
| | | Wassermenge beim Füller erhöhen |
| | Gewicht des PST zu hoch | Materialtankdruck senken |
| | | Fülldruck senken |
| | | Fluidisierdruck senken |
| | | Füllzeit verkürzen |
| | | Wassermenge beim Füllen senken |
| | | Crackspalt verkleinern |
| Kontur/Form | Unvollständige PST | Füllinjektor reinigen (Rückblasen Füller offen/geschlossen, Füller Auf/Zu) |
| | konvex | Stabilisieren und/oder Autoklavieren verkürzen und/oder Kühlen verlängern |
| | konkav | Stabilisieren und/oder Autoklavieren verlängern und/oder Kühlen verkürzen |
| Abmessungen | PST zu klein | Kühlzeit verkürzen |
| | PST zu groß | Kühlzeit erhöhen |
| Oberflächen-struktur | PSToberfläche mit Löcher/Fehlstellen/Krater | Fülldruck erhöhen |
| | | Entwässerungszeit verlängern |
| | | Wassermenge verringern |
| | | Kühlzeit verkürzen |

FIG. 4a

| | | | | |
|---|---|---|---|---|
| Festigkeit und/oder Durchlässigkeit | Verschweißung des PST außen gut und innen schlecht | Querbedampfungsdruck reduzieren<br>Querbedampfungszeit reduzieren | | |
| | | Crackspaltbedampfungszeit erhöhen | | |
| | Verschweißung der PST innen gut und außen schlecht | Autoklavbedampfungszeit erhöhen | | |
| | | Autoklavbedampfungsdruck erhöhen<br>Autoklavbedampfungszeit erhöhen | | |
| | | Autoklavbedampfungsdruck erhöhen | | |
| Oberflächen-struktur mit innerer Verschweißung | Verschmolzene Oberfläche mit guter innerer Verschweißung | Autoklavbedampgungszeit reduzieren | | |
| | | Autoklavbedampgungsdruck reduzieren | | |
| | | Autoklabedampfungszeit reduzieren<br>Autoklavbedampfungsdruck reduzieren | | |
| | Verschmolzene Oberfläche mit schlechter innerer Verschweißung | Querbedampfungsdruck reduzieren | + | Autoklavbedampgungszeit reduzieren |
| | | Querbedampfungszeit reduzieren<br>Querbedampfungsdruck reduzieren | | Autoklabedampfungszeit reduzieren<br>Autoklavbedampfungsdruck reduzieren |
| | | | | Autoklavbedampgungsdruck reduzieren |

FIG. 4b

1,1
1
0,9
0,8
0,7
0,6
0,5
0,4
0,3
0,2
0,1
0,05
0
0
1
2
3
4
5
6
7
8
9
10
11
t[s]
I
II
III
1 Sek
2 Sek
3 Sek

FIG. 5

S1
S2
S3
S4
S5
S6
S7
S8
A
B
C
D
E
F
G
Ventil offen
Ventil geschlossen
4
3,5
3
2,5
2
1,5
1
0,5
0
-0,5
-1
460
410
360
310
260
210
160
110
60
10

FIG. 6

S10
S11
S12
S13
S14
S15
S16
Druck [bar]
7,00
6,00
5,00
4,00
3,00
2,00
1,00
0,00
-1,00
Temperatur [°C]
140
120
100
80
60
40
20
0
H
L
K
I
J
0
50
100
150
200
250
300
Zykluszeit [s]

FIG. 7

Q
[kg / hour]
5000
4500
4000
3500
3000
2500
2000
1500
1000
500
0
-500
0
50
100
150
[s]
S12
S13
S14
Q1
Q2

FIG. 8

3
48
50
49
49
12
50
50
14
12
49
50
49

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9420568 A
- WO 2014011537 A1
- DE 1243123 A
- DE 1704984 A
- US 4822542 A
- US 6220842 B1
- WO 2012065926 A1
- WO 2013013784 A1
- WO 2010010010 A1
- WO 2013182555 A1
- WO 2014128214 A1
- DE 19637349 A1
- EP 224103 B1
- DE 3243632 A1
- EP 192054 B
- EP 1813408 A1
- DE 3541258 C1
- JP 2001341149 A
- US 2004010068 A1
- EP 0485714 A1
- JP S60112430 A